# EUROPÄISCHE PATENTSCHRIFT

(11) **EP 2 625 311 B1**
(45) Veröffentlichungstag und Bekanntmachung des Hinweises auf die Patenterteilung: **01.04.2015**
(21) Anmeldenummer: 11764188.6
(22) Anmeldetag: 04.10.2011
(51) Int. Cl.: C23C 22/06, C23C 22/07, C23C 22/53, C23C 22/56, C23C 22/57

(54) **VERFAHREN ZUM PASSIVIEREN EINER METALLISCHEN OBERFLÄCHE**
METHOD FOR PASSIVATING A METALLIC SURFACE
PROCÉDÉ POUR PASSIVER UNE SURFACE MÉTALLIQUE

(30) Priorität: 05.10.2010 EP 10186546
(43) Veröffentlichungstag der Anmeldung: 14.08.2013
(73) Patentinhaber: BASF SE, 67056 Ludwigshafen (DE)
(72) Erfinder: FESSENBECKER, Achim, 68753 Waghäusel (DE); HAAS, Jens, 67063 Ludwigshafen (DE); RICHTER, Frank, 67227 Frankenthal (DE); BERTKAU, Walter, 67069 Ludwigshafen (DE); SCHADE, Christian, 67063 Ludwigshafen (DE); WITTELER, Helmut, 67157 Wachenheim (DE)
(74) Vertreter: Jacobi, Markus Alexander
(86) Internationale Anmeldenummer: PCT/EP2011/067258
(87) Internationale Veröffentlichungsnummer: WO 2012/045712

(56) Entgegenhaltungen:
- EP-A1- 1 712 300
- WO-A1-2010/046243
- DE-A1-102004 041 142
- DE-A1-102005 027 567
- DE-A1-102006 053 292

## Beschreibung

Die vorliegende Erfindung betrifft ein Verfahren zur Passivierung von metallischen Oberflächen unter Verwendung einer wässrigen, sauren Zusammensetzung, die ein saure Gruppen aufweisendes Polymer sowie mindestens ein kationisches Polyamin enthält.

Weiterer Gegenstand der vorliegenden Erfindung ist eine wässrige, saure Zusammensetzung zur Passivierung einer metallischen Oberfläche, wobei die Zusammensetzung ein saure Gruppen aufweisendes, filmbildendes Polymer und mindestens ein Polyamin enthält, und wobei die Zusammensetzung einen pH-Wert von kleiner als 2 aufweist.

Die Erfindung betrifft auch die Verwendung der genannten wässrigen, sauren Zusammensetzung zur Passivierung einer Metalloberfläche sowie ein Verfahren zur Herstellung der wässrigen, sauren Zusammensetzung. Ebenso betrifft die vorliegende Erfindung eine Beschichtung auf einer metallischen Oberfläche, erhältlich durch das erfindungsgemäß beschriebene Verfahren.

Metallische Werkstoffe, insbesondere Eisen und Stahl, werden üblicherweise verzinkt, um sie vor korrosiven Umwelteinflüssen zu schützen. Der Korrosionsschutz des Zinks beruht darauf, dass es unedler ist als der metallische Werkstoff selbst und deshalb zunächst selbst korrodiert. Das Zink kann als so genannte Opferelektrode gegenüber der metallischen Oberfläche fungieren. Da die Zinkschicht selbst auch der Korrosion (Weißrost) unterworfen ist, wird der korrosive Angriff auf eine solche Zinkschicht häufig durch Aufbringen einer so genannten Passivierungsschicht verzögert. Die Passivierungsschicht soll den korrosiven Angriff auf die Metalloberfläche verzögern und kann gleichzeitig einer Verbesserung der Haftung von gegebenenfalls aufzubringenden Lackschichten dienen. Anstelle des Begriffs Passivierungsschicht wird der Begriff Konversionsschicht häufig synonym verwendet.

Das Aufbringen von Passivierungsschichten erfolgt beispielsweise bei verzinkten Metalltellen (z.B. galvanisch verzinkten oder heißverzinkten Trägern), die anschließend lackiert werden. Das Aufbringen erfolgt auch bei solchen Teilen, die ohne Lackierung zum Einsatz kommen. Ebenso werden metallische Oberflächen aus Aluminium oder Aluminiumlegierungen häufig mit einer Passivierungsschicht versehen, insbesondere dann, wenn sie anschließend lackiert werden sollen.

Zur Herstellung von flächigen, metallischen Werkstücken, wie beispielsweise Automobilteilen, Karosserieteilen, Geräteverkleidungen, Fassadenverkleidungen, Deckenverkleidungen oder Fensterprofilen, werden als Rohmaterial heutzutage üblicherweise lange Metallbänder eingesetzt, die mittels geeigneter Techniken zu den gewünschten Formteilen geformt und/oder zusammengefügt werden. Die Korrosionsschutzbehandlung derartiger metallischer Materialien erfolgt üblicherweise in mehrstufigen Prozessen. Die Oberfläche behandelter Metalle weist oftmals mehrere verschiedene Schichten auf. Eine Korrosionsschutzbehandlung kann an verschiedenen Stellen des Herstellprozesses vorgenommen werden. Hierbei kann es sich sowohl um temporären Korrosionsschutz als auch um permanenten Korrosionsschutz handeln. Ein temporärer Schutz wird beispielsweise nur zum Lagern oder Transportieren des metallischen Werkstückes, z.B. des Metallbandes, aufgebracht und vor der endgültigen Verarbeitung wieder entfernt.

Technisch und wirtschaftlich von besonderer Bedeutung sind Bänder mit einer verzinkten Oberfläche, insbesondere Bänder aus galvanisch verzinktem oder feuerverzinktem Eisen bzw. Eisenlegierungen wie z.B. Stahl. Weiterhin von Bedeutung sind Metallbänder aus Aluminium bzw. Aluminiumlegierungen.

In der Regel werden auf die passivierte Oberfläche eine oder mehrere zusätzliche Lackschichten aufgebracht. Sie dienen beispielsweise dazu, die Passivierungsschicht und das Metall vor korrosiven Gasen und/oder Flüssigkeiten und/oder vor mechanischen Beschädigungen (wie beispielsweise Steinschlag) zu schützen. Sie kann auch ästhetischen Zwecken dienen. Lackschichten sind üblicherweise deutlich dicker als Passivierungsschichten. Typische Dicken für eine Schicht aus Lack reichen von 4 µm bis 400 µm.

Im Stand der Technik wurden Passivierungsschichten auf Zink- oder Aluminiumoberflächen üblicherweise durch Behandlung des zu schützenden Werkstücks mit wässrigen sauren Lösungen von Chromaten (z.B. CrO₃) oder sauren, wässrige Lösungen von Cr(III)-Salzen (siehe EP-A 0 907 762) erhalten.

In Gegenwart von Luftsauerstoff bildet sich in der Regel auf der Oberfläche von Zink oder Zinklegierungen, Aluminium oder Aluminiumlegierungen zunächst eine dünne Oxidschicht, die den korrosiven Angriff auf das darunter liegende Metall verlangsamt. Typischerweise löst sich bei den Passivierungsverfahren basierend auf Chromverbindungen dieser vorhandene Oxidfilm und ein Teil des zu schützenden Metalls auf, und wird zumindest teilweise in einen Film auf der Metalloberfläche eingebaut. Dieser Film ähnelt dem natürlicherweise vorhandenen Oxidfilm und enthält in der Regel gezielt eingebrachtes Phosphat, Schwermetalle und/oder Fluoride. Die so erhaltenen Passivierungs- oder Konversionsschichten soll das darunter liegende Metall wirksam vor einem korrosiven Angriff schützen.

In neuerer Zeit wurden auch Passivierungsverfahren z.B. für metallbeschichtete Stahlbleche und Stückgut (z.B. feuerverzinkter Stahl) auf der Grundlage von Polymeren als organische Filmbildner entwickelt. Hierbei werden meist saure wässrige Lösungen von verschiedenen filmbildenden Polymeren, welche z.B. Carboxyl-, Phosphorsäure- und/oder Phosphonsäure-Gruppen aufweisen, zur Ausbildung der Passivierungsschicht eingesetzt. Nach dem Auftragen der sauren Formulierung wird die Metalloberfläche (z.B. Zink) üblicherweise angelöst und es werden mehrwertige Metallionen (z.B. Zn²⁺) freigesetzt. Üblicherweise steigt der pH-Wert in Nähe der Metalloberfläche . Es kommt in der Regel zur Vernetzung und Filmbildung der sauren Polymere mit den mehrwertigen Metallionen.

Da bei den beschriebenen Passivierungsverfahren unter Verwendung von sauren Polymeren der Einsatz von Schwermetallen wie Chrom weitgehend vermieden bzw. reduziert werden kann, gewinnen diese Passivierungsverfahren auf Polymerbasis stetig an Bedeutung. Im Stand der Technik sind verschiedene meist saure Passivierungszubereitungen bekannt, die in der Regel ein wasserlösliches, säuregruppenhaltiges, filmbildendes Polymer enthalten. Auch wurden bereits Verfahren zur Passivierung unter Verwendung dieser Zubereitungen beschrieben

DE 10 2006 053292 A1 offenbart ein Beispiel einer Zusammensetzung zum Passivieren mit Polyethylenimin, Acrylsäure und Vinylphosphonsäure bei pH 2.5.

DE-A 195 16 765 betrifft ein Verfahren zur Erzeugung von Konversionsschichten auf Oberflächen aus Zink oder Aluminium durch Behandlung mit einer sauren Lösung, die einen organischen Filmbildner sowie Aluminiumionen in Form eines wasserlöslichen Komplexes mit chelatbildenden Carbonsäuren und Phosphorsäuren enthält. Als organische Filmbildner werden carboxylgruppenhaltige Polymere, insbesondere Homo- und/oder Copolymerisate von Acryl- und/oder Methacrylsäure genannt.

In WO 2004/074372 wird die Passivierung von metallischen Oberflächen unter Verwendung von Co-Polymeren enthaltend Acrylsäure und Vinylphosphonsäure und/oder Maleinsäure beschrieben, wobei die Passivierungsformulierung weitere Komponenten enthalten kann.

WO 2008/012248 beschreibt saure Zubereitungen zum Passivieren von metallischen Oberflächen enthaltend Co-Polymere aufgebaut aus Monomethacrylsäureestern mit hydrophoben Gruppen (z.B. Hydroxyethylacetat), Monomeren mit Phosphonsäuregruppen (z.B. Vinylphosphonsäure) und Monomeren mit Carboxyl-Gruppen (z.B. Acrylsäure).

WO 2006/134116 beschreibt ein Verfahren zur Passivierung von metallischen Oberflächen durch Behandlung der Oberfläche mit einer wässrigen Zusammensetzung enthaltend säuregruppenhaltigen Polymere und mehrwertige Kationen wie Zink-, Calcium-, Magnesium oder Aluminium-Ionen.

WO 2006/134117 beschreibt ein Verfahren zur Passivierung von metallischen Oberflächen durch Behandlung der Oberfläche mit einer wässrigen Zusammensetzung enthaltend saure Polymere unter Zugabe von Wachsen (z. B. Polyethylenwachsen).

Solche wässrigen Passivierungslösungen zur Verbesserung des Korrosionsschutzes werden oft direkt nach der Verzinkungslinie (z.B. einer Heißverzinkung) auf das verzinkte Stahlband aufgebracht. Der Auftrag erfolgt in der Regel mittels Walztechnik, wobei beispielsweise einfache Abquetschwalzen oder technologisch aufwendigere Roll-Coater zum Einsatz kommen.

Bei der technologisch einfach und preisgünstig zu realisierenden Abquetschwalze wird typischerweise die Passierungslösung auf das verzinkte Stahlband aufgebracht (z.B. aufgesprüht) und dann mittels einer Walze abgequetscht. Mit Hilfe der Abquetschwalzen-Technologie können häufig nur qualitativ unzureichende, d.h. ungleichmäßigere Passivierungsschichten erhalten werden. Wenn besondere Ansprüche an die aufgebrachten Schichten gestellt werden, kommt meist die aufwendigere und kostenintensivere Roll-Coater-Technik zum Einsatz, wobei die Passivierungslösung zunächst auf eine oder mehrere Walze aufgebracht und dann auf das Stahlband übertragen wird. Mit diesem Verfahren können meist homogenere Passivierungsschicht mit relativ gleichmäßiger Schichtdicke erhalten werden.

Die Zeit, die für die Filmbildung, d.h. das Vernetzen des sauren Polymers zur Verfügung steht, ist normalerweise vergleichsweise kurz. Bei der kontinuierlichen Passivierung eines Stahlbandes bleiben vom Auftragen der Formulierung auf das Stahlband bis zum Trocknen des beschichteten Bandes im Trockner je nach Bandgeschwindigkeit meist nur wenige Sekunden, typischerweise z.B. 2 bis 10 Sekunden.

In WO 2009/047209 ist ein kontinuierliches Verfahren zur Beschichtung von Stahlbändern beschrieben, wobei die Passivierungszusammensetzung zunächst auf eine Beschichtungswalze aufgebracht, abgerakelt und dann auf das Stahlband übertragen wird.

Normalerweise spielen mehrwertige Kationen, wie beispielsweise Zink-Ionen (Zn²⁺) oder Aluminium-Ionen (Al³⁺), als Vernetzer für saure Polymere bei der Bildung der Passivierungsschicht eine Rolle. Hierbei können auch die aus der Metalloberfläche freigesetzten Ionen (z.B. Zink-Ionen), welche sich nach dem Auftragen der sauren Formulierung durch die Säure lösen, zur Vernetzung beitragen. Bei Anstieg des pH-Wertes in der Nähe der Oberfläche kann es zur (teilweisen) Deprotonierung der sauren Gruppen kommen (z.B. Bildung von COO⁻ -Ionen).

Üblicherweise kann beobachtet werden, dass beim Anstieg des pH-Wertes über etwa 2 bis 2,5 die vorhandenen Zink-Ionen (Zn²⁺) mit den sauren Gruppen des Polymers vernetzen. Es bildet sich ein unlösliches vernetztes Polymer-Netzwerk.

Im Stand der Technik wird die Zugabe von mehrwertigen Ionen als Vernetzer in polymeren Passivierungsschichten beschrieben. So offenbart WO 2006/134116 ein Verfahren zur Passivierung von metallischen Oberflächen durch Behandlung der Oberfläche mit einer wässrigen Zusammensetzung enthaltend säuregruppenhaltigen Polymere und mehrwertige Kationen wie Zink-, Calcium-, Magnesium- oder Aluminium-Ionen.

Bei den bekannten Verfahren nimmt gemäß dem oben beschriebenen Mechanismus der Vernetzungsgrad mit zunehmendem Abstand von der Zink-Oberfläche ab. Gleichzeitig trocknet die Formulierung in der Regel von oben her ein. Es verbleibt also eine oberste Polymerschicht, welche nicht oder nur unzureichend vernetzt ist und dementsprechend wasserlöslich bleibt. Diese oberste Schicht kann abgelöst werden; die Korrosionsbeständigkeit nimmt ab und die Oberfläche weist eine ungünstige Optik auf. Diese unzureichend vernetzten Passivierungsschichten ergeben etwa ungünstige Werte im so genannten Stapeltest ("Stack-Test"), bei dem die beschichteten Metalloberflächen aufeinander gestapelt und über einen Zeitraum von mehreren Tagen Wasser ausgesetzt werden. Aber auch bei Zugabe von mehrwertigen Ionen kann oftmals keine ausreichende Vernetzung der sauren Polymere über die gesamte Schichtdicke erzielt werden.

Eine Aufgabe der vorliegenden Erfindung ist die Bereitstellung von Zusammensetzungen und Verfahren zur Behandlung von Metalloberflächen, die zur Ausbildung einer Passivierungsschicht auf Metalloberflächen geeignet sind, wobei eine möglichst durchgehend vernetzte beständige Passivierungsfilmschicht erzielt werden soll.

Die erhaltene Passivierungsschicht soll sowohl für Werkstücke geeignet sein, die anschließend lackiert werden, als auch für solche, die ohne Lackierung zum Einsatz kommen. Dabei ist bei anschließender Lackierung der Werkstücke zu beachten, dass eine ausreichende Haftung der nachfolgenden Lackschicht auf der Passivierungsschicht gewährleistet ist. Dies bedeutet, dass sich die Lackhaftung auf der Passivierungsschicht verbessern (oder zumindest nicht verschlechtern) sollte. Die Güte der Lackhaftung kann mit dem so genannten Gitter-Schnitt-Test (siehe auch DIN-ISO-Norm 2409) an einer ebenen Metalloberfläche und/oder an einer definiert eingedellten Metalloberfläche bestimmt werden. Hierzu wird ein festgelegtes Gitter-Schnittmuster in die Beschichtung bis zur beschichteten Unterlage eingeschnitten. Dann wird ein definiertes Klebeband über den Gitterschnitt gelegt und abgezogen. Das Abplatzen der beschichteten Gitterelemente wird anschließend visuell bewertet und anhand von Gitterschnitt-Kennwerten in einer Skala von 0 bis 5 angegeben.

Weiterhin ist die Optik von polymerhaltigen Passivierungsschichten von Bedeutung, wobei klare und transparente Schichten gewünscht sind. Die Optik kann durch das so genannte "Auskreiden" beeinträchtigt werden. Hierbei sind die Schichten nicht mehr vollständig klar und transparent, sondern weisen mehr oder weniger intransparente, weiße Flecken auf. "Auskreiden" kann leicht mit Weißrostbildung verwechselt werden und kann die Qualitätskontrolle erschweren. Daher sollten die mit dem erfindungsgemäßen Verfahren bzw. mittels der erfindungsgemäßen Zusammensetzung hergestellten Passivierungsschichten eine klare, transparente Optik und eine geringe Neigung zum Auskreiden aufweisen.

Es wurde überraschenderweise gefunden, dass mit Hilfe von Passivierungszusammensetzungen auf Basis von Polymeren mit sauren Gruppen (insbesondere Copolymere umfassend Acrylsäure, Vinylphosphonsäure, Hydroxyethylacrylat-Copolymere), welche kationische Polyamine (z.B. Polyethylenimine) als kationische Vernetzer enthalten, sehr beständige und durchgehend vernetzte Passivierungsschichten erhalten werden können. Es wurde zudem gefunden, dass die Filmbildung bei Einsatz von kationischen Polyaminen (z.B. Polyethyleniminen) als kationische Vernetzer bereits bei sehr niedrigen pH-Werten (etwa von 0,7 bis 1,5) einsetzt.

Voraussetzung für ein solches Passivierungsverfahren ist, dass klare, lagerstabile Lösungen der beiden an sich unverträglichen Komponenten Polyamin (Polykation) und sauren Polymeren (Polyanion) hergestellt werden können. Dies wird erreicht, indem im ersten Schritt die Polyamine mit starken Säuren wie z.B. Schwefelsäure, Phosphorsäure, Methansulfonsäure neutralisiert und auf den gleichen pH-Wert wie die wässrige Lösung des sauren Polymers eingestellt werden (typischerweise pH kleiner 2). Im zweiten Schritt werden die beiden wässrigen, sauren Polymerlösungen zusammengegeben.

Die Polyammoniumverbindungen bewirken beim Anstieg des pH-Wertes eine Vernetzung über die sauren Gruppen des Polymers (z.B. Carboxylat, Phosphonat), wobei die Vernetzung schon bei sehr niedrigen pH-Werten unter pH 2, insbesondere bereits ab einem pH-Wert von 0,7, erfolgen kann. Die Vernetzung entsprechender saurer Polymere mit mehrwertigen Ionen, wie Zn²⁺, erfolgt in der Regel erst bei höheren pH-Werten von 2 bis 2,5. Vorteilhaft ist somit, dass die Vernetzung der Passivierungsschicht im erfindungsgemäßen Verfahren unter Zusatz einer Polyammonium-Verbindung auch in den weiter von der Zink-oberfläche entfernten Bereichen schneller und damit vollständiger erfolgt.

Mit Hilfe der erfindungsgemäßen Kombination aus wasserlöslichen, saure Gruppen umfassenden Polymeren (insbesondere der beschriebenen Copolymere enthaltend bzw. aufgebaut aus Acrylsäure und Vinylphosphonsäure) und einem kationischen Polyamin lässt sich eine deutliche Verbesserung des Korrosionsschutzes von Metalloberflächen im Vergleich zu einer bekannten Behandlung unter Verwendung von mehrwertigen Kationen als Vernetzer erhalten.

Die erfindungsgemäße Passivierungszusammensetzung ist zudem vorzugsweise frei von Schwermetallverbindungen. Weiterhin vorteilhaft ist die gegenüber nicht passivierten, metallischen Oberflächen und/oder gegenüber Passivierungsbeschichtungen des Standes der Technik verbesserte Lackhaftung auf den mit dem erfindungsgemäßen Verfahren beschichteten metallischen Oberflächen.

Darüber hinaus wurde gefunden, dass durch die Zugabe von oberflächenaktiven Substanzen, wie z.B. von kationischen Tensiden (z.B. Alkylammoniumverbindungen), zu der wässrigen Passivierungszusammensetzung die Korrosionsbeständigkeit der Passivierungsschicht weiter verbessert werden kann.

Die vorliegende Erfindung bezieht sich auf ein Verfahren zum Passivieren einer metallischen Oberfläche (oftmals besteht die metallische Oberfläche im Wesentlichen aus einem oder mehreren Metallen ausgewählt aus der Gruppe bestehend aus Zink, Aluminium und Magnesium), bei dem die metallische Oberfläche mit einer wässrigen Zusammensetzung enthaltend (oder bestehend aus) folgende(n) Komponenten in Kontakt gebracht wird:
a) mindestens ein wasserlösliches, saure Gruppen umfassendes Polymer (X), wobei das Polymer (X) mindestens 0,6 mol Säuregruppen/100 g Polymer aufweist; und wobei das Polymer (X) Carboxyl-Gruppen und Phosphonsäure-Gruppen umfasst;
b) 0,5 bis 5 Gew.-% (bezogen auf die gesamte wässrige Zusammensetzung) mindestens eines Polyamins (P) umfassend mindestens zwei Ammonium-Gruppen ;
c) mindestens ein Lösemittel (L), enthaltend mindestens 80 Gew.-% Wasser (bezogen auf das gesamte Lösemittel (L));
d) optional mindestens ein Tensid (T);
e) optional mindestens eine weitere Komponente (K);
wobei der pH-Wert der wässrigen Zusammensetzung (bei Raumtemperatur, 25 °C) im Bereich von 0,5 bis 2, insbesondere im Bereich von 0,7 bis 1,5, bevorzugt im Bereich von 0,7 bis 1 liegt.

Insbesondere bezieht sich die vorliegende Erfindung auf ein Verfahren zum Passivieren einer metallischen Oberfläche wie oben beschrieben, dadurch gekennzeichnet, dass eine Zusammensetzung eingesetzt wird, enthaltend (bzw. bestehend aus):

| | |
|---|---|
| a) 10 bis 40 Gew.-% | mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst; |
| b) 0,5 bis 5 Gew.-% | mindestens eines Polyamins (P) umfassend mindestens zwei Ammonium-Gruppen, ausgewählt aus Polyethyleniminen, alkoxylierten Polyethyleniminen, quaternisierten Polyethyleniminen, Polyvinylimidazolen, alkoxylierten Polyvinylimidazole, quaternisierten Polyvinylimidazolen, Polyvinylamine, alkoxylierten Polyvinylaminen, quaternisierten Polyvinylaminen; insbesondere ausgewählt aus Polyethyleniminen, alkoxylierten Polyethyleniminen (z.B. propoxylierten und/oder ethoxylierten Polyethyleniminen) Polyvinylaminen, Polyvinylimidazolen und quarternisierten Polyvinylimidazolen, insbesondere ausgewählt aus Polyethyleniminen, Polyvinylaminen und Polyvinylimidazolen; |
| c) 20 bis 89 Gew.-% | mindestens eines Lösemittels (L), enthaltend mindestens 80 Gew.-% Wasser, |
| d) optional 0,1 bis 1 Gew.-% | mindestens eines Tensids (T); |
| e) optional 0 bis 30 Gew.-% | mindestens einer weiteren Komponente (K). |

Die Erfindung betrifft auch die Formulierungen bzw. Zusammensetzungen selbst und Verfahren zu deren Herstellung.

Zur Passivierung mittels des erfindungsgemäßen Verfahrens wird eine saure wässrige Formulierung eingesetzt, welche mindestens ein wasserlösliches, saure Gruppen umfassendes Polymer (X) umfasst. Bei den eingesetzten Polymeren (X) kann es sich um Homopolymere und/oder um Copolymere handeln. Es können auch Gemische mehrerer verschiedener Polymere eingesetzt werden.

Die erfindungsgemäß eingesetzte Formulierung (bzw. Zusammensetzung) umfasst vorzugsweise 10 bis 40 Gew.-%, bevorzugt 15 bis 35 Gew.-%, besonders bevorzugt 15 bis 30 Gew.-% und häufig 18 bis 25 Gew.-% des Polymers bzw. der Polymere (X), bezogen auf die Menge aller Komponenten der Formulierung (einschließlich der Lösemittel).

Unter dem Begriff "wasserlöslich" ist im Sinne dieser Erfindung zu verstehen, dass das oder die eingesetzten Polymere (X) homogen wasserlöslich sind und zwar in den für die Zusammensetzungen genannten Mengen. Bevorzugt sollten die eingesetzten Polymere (X) lückenlos (unbeschränkt) mit Wasser mischbar sein. Insbesondere sollten die eingesetzten Polymere eine Löslichkeit von mindestens 50 g/l, bevorzugt 100 g/l und besonders bevorzugt mindestens 200 g/l in Wasser bei Raumtemperatur und pH 7 aufweisen. Allerdings ist zu beachten, dass die Löslichkeit der beschriebenen, saure Gruppen umfassenden Polymere (X) in Wasser auch vom pH-Wert abhängig ist. Ein Polymer, welches bei einem bestimmten pH-Wert eine nicht ausreichende Löslichkeit für den vorgesehenen Einsatzzweck hat, kann bei einem anderen pH-Wert eine noch ausreichende Löslichkeit aufweisen.

Erfindungsgemäß weisen die eingesetzten Polymere (X) mindestens 0,6 mol Säuregruppen/100 g des Polymers auf. Diese Mengenangaben beziehen sich auf die freien Säuregruppen. Bevorzugt weisen die Polymere mindestens 0,9 mol Säuregruppen/100 g auf, besonders bevorzugt mindestens 1 mol Säuregruppen/100 g und häufig sogar mindestens 1,2 mol Säuregruppen/100g. In einer Ausführungsform der Erfindung sollten nicht mehr als 25 mol % der im Polymer X vorhanden Säuregruppen neutralisiert sein, bevorzugt nicht mehr als 20 mol % und besonders bevorzugt nicht mehr als 12 mol %.

Die sauren Gruppen der Polymere (X) sind in der Regel ausgewählt aus Carboxylgruppen, Sulfonsäure-Gruppen, Phosphorsäure-Gruppen und/oder Phosphonsäure-Gruppen. Bevorzugt sind die sauren Gruppen ausgewählt aus Carboxyl-Gruppen, Phosphorsäure-Gruppen und Phosphonsäure-Gruppen. Besonders bevorzugt handelt es sich bei dem eingesetzten Polymer (X) um ein Copolymer (X1) aufgebaut aus mindestens zwei verschiedenen, säuregruppenhaltigen Monomeren, insbesondere aus Monomeren enthaltend Carboxyl-Gruppen und aus Monomeren enthaltend Phosphonsäure-Gruppen.

Besonders bevorzugt werden zur Ausführung der Erfindung Homo- oder Copolymere eingesetzt, welche Acrylsäure und/oder Methacrylsäureeinheiten umfassen.

Insbesondere handelt es sich bei dem Polymer (X) um ein oder mehrere wasserlösliche Copolymere (X1) aufgebaut aus Acrylsäure und/oder Methacrylsäure-Monomereinheiten (M1) und davon verschiedenen monoethylenisch ungesättigten Monomeren mit sauren Gruppen (M2). Optional können weiterhin OH-Gruppen aufweisende Acrylsäureesters oder Methacrylsäureester (M3) enthalten sein. Optional können weitere Monomere (M4) als Baueinheiten vorhanden sein.

In einer bevorzugten Ausführungsform der Erfindung handelt es sich bei dem wasserlöslichen Polymeren (X) um ein Copolymer (X1), welches aus folgenden Monomeren aufgebaut ist ("diese enthält"):

| | |
|---|---|
| M1: 30 bis 90 Gew.-% | Methacrylsäure und/oder Acrylsäure; |
| M2: 10 bis 70 Gew.-% | mindestens eines weiteren von (M1) verschiedenen, monoethylenisch ungesättigten Monomers, welches eine oder mehrere saure Gruppen aufweist (insbesondere monoethylenisch ungesättigte Dicarbonsäuren mit 4 bis 7 Kohlenstoffatomen, monoethylenisch ungesättigten Phosphorsäuren, monoethylenisch ungesättigten Phosphonsäuren, bevorzugt monoethylenisch ungesättigten Phosphonsäuren) |
| optional M3: 0 bis 40 Gew.-% | mindestens eines OH-Gruppen aufweisenden Methacrylsäureesters und/oder Acrylsäureesters; |
| optional M4: 0 bis 30 Gew.-% | mindestens eines weiteren, von (M1), (M2) und (M3) verschiedenen ethylenisch ungesättigten Monomers. |

Diese Gew.-%-Angaben beziehen sich auf die Summe (100 Gew.-%) aller Monomere im Copolymer (X1).

Weiterhin können die in WO 2009/047209 beschriebenen bevorzugten Polymere (X), welche saure Gruppen umfassen, im Rahmen der vorliegenden Erfindung eingesetzt werden. Für die im erfindungsgemäßen Verfahren eingesetzten Polymere (X) können die in WO 2009/047209 beschriebenen Ausführungsformen hinsichtlich der Monomere (M1), (M2); (M3) und (M4) eingesetzt werden.

Die Menge an Acrylsäure und/oder Methacrylsäure (M1) im Copolymer (X1) beträgt 30 bis 90 Gew.-%, bevorzugt 40 bis 80 Gew.-% und besonders bevorzugt 50 bis 70 Gew.-%, wobei diese Angabe auf die Summe aller Monomere im Polymer bezogen ist.

Die Menge der Monomere (M2) im Copolymer (X1) beträgt 10 bis 70 Gew.-%, bevorzugt 20 bis 60 Gew.-%, und besonders bevorzugt 30 bis 50 Gew.-%, jeweils bezogen auf die Summe aller Monomere im Polymer.

Bei dem Monomer (M2) handelt es sich um mindestens ein von (M1) verschiedenes, aber mit (M1) copolymerisierbares, monoethylenisch ungesättigtes Monomer, welches eine oder mehrere saure Gruppen aufweist, wobei die sauren Gruppen ausgewählt sind aus Carboxyl-Gruppen, Phosphorsäure-Gruppen, Phosphonsäure-Gruppen oder Sulfonsäure-Gruppen. Es können mehrere verschiedene Monomere (M2) eingesetzt werden.

Bezüglich der bevorzugten Ausführungsformen von Monomer (M2) wird auf das Dokument WO 2009/047209 verwiesen.

Beispiele derartiger Monomere (M2) umfassen Crotonsäure, Vinylessigsäure, C₁-C₄ Halbester monoethylenisch ungesättigter Dicarbonsäuren, Styrolsulfonsäure, Vinylsulfonsäure, Allylsulfonsäure, 2-Acrylamido-2-methyl-1-propansulfonsäure (AMPS), Vinylphosphonsäure, Phosphorsäuremonovinylester, Maleinsäure, Fumarsäure oder Itaconsäure. Bevorzugt wird Vinylphosphonsäure als Monomer (M2) eingesetzt.

Das Copolymer (X1) kann darüber hinaus optional mindestens einen OH-Gruppen aufweisenden Acrylsäureesters und/oder Methacrylsäureester als Monomer-Baustein (M3) enthalten. Bevorzugt handelt es sich um Monohydroxyacrylsäureester und/oder Monohydroxymethacrylsäureester. Bevorzugt wird Hydroxyethylacrylat als Monomer (M3) eingesetzt.

Die Menge der Monomere (M3) im Copolymer (X1) beträgt 0 bis 40 Gew.-%, bevorzugt 1 bis 30 Gew.-%. Bezüglich der weiteren bevorzugten Ausführungsformen von Monomer (M3) wird auf das Dokument WO 2009/047209 verwiesen.

Neben den Monomeren (M1), (M2), sowie gegebenenfalls (M3) kann optional 0 bis 30 Gew.-% mindestens eines weiteren, von (M1), (M2) und (M3) verschiedenen, ethylenisch ungesättigten Monomers (M4) eingesetzt werden. Darüber hinaus werden vorzugsweise keine anderen Monomere eingesetzt.

Die Monomere (M4) können zur Feinsteuerung der Eigenschaften des Copolymers (X1) dienen. Es können auch mehrere verschiedene Monomere (M4) eingesetzt werden. Sie werden vom Fachmann je nach den gewünschten Eigenschaften des Copolymers ausgewählt mit der Maßgabe, dass sie mit den Monomeren (M1), (M2) und (M3) copolymerisierbar sein müssen. Bevorzugt handelt es sich um monoethylenisch ungesättigte Monomere In besonderen Fällen können aber auch geringe Mengen von Monomeren mit mehreren polymerisierbaren Gruppen eingesetzt werden. Hierdurch kann das Copolymer in geringem Umfange vernetzt werden. Beispiele geeigneter Monomere (M4) umfassen insbesondere aliphatische Alkylester der (Meth)acrylsäure, wie Methyl(meth)acrylat, Ethyl(meth)acrylat, Butyl(meth)acrylat oder 2-Ethylhexyl (meth)acrylat. Weiterhin geeignet sind Vinyl- oder Allylether wie z.B. Methylvinylether, Ethylvinylether, Propylvinylether, 2-Ethylhexylvinylether, Vinylcyclohexylether, Vinyl-4-hydroxybutylether, Decylvinylether, 2-(Diethyl-amino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat. Es können auch basische Co-Monomere, wie beispielsweise Acrylamid und alkylsubstituierte Acrylamide eingesetzt werden.

Beispiele für vernetzende Monomere umfassen Moleküle mit mehreren ethylenisch ungesättigten Gruppen, beispielsweise Di(meth)acrylate wie Ethylenglykoldi(meth)- acrylat oder Butandiol-1,4-di(meth)acrylat oder Poly(meth)acrylate wie Trimethylolpropantri(meth)acrylat oder auch Di(meth)acrylate von Oligo- oder Polyalkylenglykolen, wie Di-, Tri- oder Tetraethylenglykoldi(meth)acrylat. Weitere Beispiele umfassen Vinyl(meth)acrylat oder Butandioldivinylether. Der Ausdruck "(Meth)acrylat" wie er hier verwendet wird bezeichnet entweder eine Acrylgruppe oder eine Methacrylgruppe.

Die Menge aller eingesetzten Monomere (M4) zusammen beträgt 0 bis 30 Gew.-% bezogen auf die Gesamtmenge der eingesetzten Monomere. Bevorzugt beträgt die Menge 0 bis 20 Gew.-%, besonders bevorzugt 0 bis 10 % Gew.-%. Falls vernetzend wirkende Monomere (M4) anwesend sind, sollte deren Menge im Regelfalle 5 %, bevorzugt 2 Gew.-% (bezogen auf die Gesamtmenge aller für das Verfahren eingesetzten Monomere) nicht überschreiten. Sie kann beispielsweise 10 ppm bis 1 Gew.-% betragen.

Bezüglich der bevorzugten Ausführungsformen von Monomer (M4) wird auf das Dokument WO 2009/047209 verwiesen.

Eine bevorzugte Ausführungsform betrifft das oben beschriebene Verfahren, dadurch gekennzeichnet, dass es sich bei dem wasserlöslichen Polymeren (X) um ein Copolymer (X1) handelt, welches aus folgenden Monomeren aufgebaut ist (bzw. diese enthält):

| | |
|---|---|
| M1: 20 bis 60 Gew.-% | Acrylsäure; |
| M2: 20 bis 60 Gew.-% | Vinylphosphonsäure; |
| M3: 1 bis 40 Gew.-% | Hydroxyethylacrylat. |

Die Herstellung der Polymere (X) bzw. Copolymere (X1) kann nach dem Fachmann bekannten Verfahren erfolgen. Bevorzugt werden die Copolymere durch radikalische Polymerisation der genannten Komponenten (M1), (M2) und optional (M3) und/oder (M4) in wässriger Lösung hergestellt. Einzelheiten zur Durchführung einer radikalischen Polymerisation sind dem Fachmann bekannt. Herstellungsverfahren für die Copolymere (X1) sind beispielsweise in WO 2006/021308 oder in WO 2006/134116 beschrieben.

Die synthetisierten Copolymere (X1) können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Bevorzugt werden die Copolymere (X1) nach der Polymerisation nicht aus der wässrigen Lösung isoliert, sondern die erhaltenen Lösungen der Copolymere werden (ggf. nach Zugabe weiterer Zusatzstoffe) als solche für das erfindungsgemäße Verfahren eingesetzt. Um eine solche direkte Weiterverwendung zu erleichtern, sollte die Menge des zur Polymerisation verwendeten wässrigen Lösemittels von Anfang an so bemessen werden, dass die Konzentration des Polymers im Lösemittel für die Anwendung geeignet ist. Es kann auch zunächst ein Konzentrat hergestellt werden, welches erst vor Ort mit Wasser oder optional anderen Lösemitteln auf die gewünschte Konzentration verdünnt wird.

Das Molekulargewicht, insbesondere bezogen auf das gewichtsmittlere Molekulargewicht M_{w}, der für das erfindungsgemäße Verfahren eingesetzten Polymere (X) bzw. Copolymere (X1) wird vom Fachmann je nach der gewünschten Anwendung festgelegt. Eingesetztwerden können beispielsweise Polymere mit einem Molekulargewicht M_{w} von 3.000 bis 1.000.000 g/mol. Bewährt haben sich insbesondere Polymere mit 5.000 g/mol bis 500.000 g/mol, bevorzugt 10.000 g/mol bis 250.000 g/mol, besonders bevorzugt 15.000 bis 100.000 g/mol und ganz besonders bevorzugt 20.000 bis 75.000 g/mol.

Die oben beschriebene wässrige Zusammensetzung enthält mindestens ein Polyamin (P) umfassend mindestens zwei Ammoniumgruppen.

Unter Ammoniumgruppen im Sinne der vorliegenden Erfindung, werden primäre, sekundäre, tertiäre und/oder quaternäre Aminogruppen verstanden, die unter den gegeben Bedingungen (wässrige Zusammensetzung mit pH Wert von 0,5 bis 2) eine kationische Ladung aufweisen.

Die Polyamin-Komponente (P) ist in der im erfindungsgemäßen Verfahren eingesetzten wässrigen Zusammensetzung in einer Menge von 0,5 bis 9,5 Gew.-%, bevorzugt 0,5 bis 5 Gew.-%, insbesondere bevorzugt 1 bis 3 Gew.-% enthalten.

Unter einem Polyamin bzw. einer Polyamin-Verbindung im Sinne der vorliegenden Erfindung ist eine gesättigte oder ungesättigte, offenkettige oder cyclische organische Verbindung enthaltend mindestens zwei (bevorzugt mindestens fünf) Amino-Gruppen zu verstehen, wobei die Amino-Gruppen ausgewählt sein können aus primären, sekundären, tertiären und quaternären Amino-Gruppen.

Insbesondere können auch alkoxylierte, bevorzugt ethoxylierte und/oder propoxylierte Polyamin-Verbindungen im Rahmen der vorliegenden Erfindung eingesetzt werden. Insbesondere können alkoxylierte Polyamin-Verbindungen umfassend 1 bis 1000, bevorzugt 1 bis 100, bevorzugt 1 bis 50, bevorzugt 1 bis 10 Alkoxy-Einheiten im Rahmen der vorliegenden Erfindung eingesetzt werden.

Insbesondere können auch quaternisierte Polyamin-Verbindungen im Rahmen der vorliegenden Erfindung eingesetzt werden, welche mindestens eine quarternäre Ammoniumgruppe aufweisen, welche insbesondere durch Substitution an der Amino-Gruppe mit einem oder mehreren Rest(en), ausgewählt aus C₁-C₆-Alkyl und Benzyl, ausgehend von der nicht quaternisierten Polyamin-Verbindung erhalten werden kann.

Bevorzugt wird in dem erfindungsgemäßen Verfahren mindestens ein Polyamin (P) eingesetzt ausgewählt aus der Gruppe bestehend aus Polyalkyliminen (Polyimino-alkylene, z.B. Polyethyleniminen PEI), alkoxylierten Polyalkyliminen (z.B. alkoxylierten Polyethyleniminen), quaternisierten Polyalkyliminen (z.B quaternisierten Polyethyleniminen), Polyvinylimidazolen (Polyimidazolen), quaternisierten Polyvinylimidazolen, alkoxylierten Polyvinylimidazole, Polyvinylamine, quaternisierten Polyvinylamine und alkoxylierten Polyvinylaminen.

Bevorzugt wird in dem erfindungsgemäßen Verfahren mindestens ein Polyamin eingesetzt ausgewählt aus der Gruppe bestehend aus Polyalkyliminen (Polyimino-alkylene, z.B. Polyethylenimin PEI), alkoxylierten Polyethyleniminen, Polyvinylimidazolen (Polyimidazolen), quaternisierten Polyvinylimidazolen und Polyvinylamine.

Insbesondere können als Polyamin (P) Polyalkylimine, wie Polyethylenimine (PEI) oder Polypropylenimine, eingesetzt werden.

Polyethylenimine können insbesondere durch die Struktureinheit der folgenden allgemeinen Formel (P1) beschrieben werden 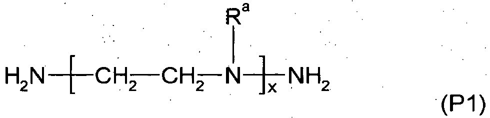 wobei
R^{a} ausgewählt ist aus Wasserstoff, C₁₋₆ Alkyl, Benzyl oder einem Rest basierend auf Ethylenimin wie -(CH₂CH₂NH)ₙ H mit n 1 bis 200
x ist 4 bis 20.000, bevorzugt 4 bis 1.000, bevorzugt 4 bis 300, bevorzugt 4 bis 100, besonders bevorzugt 10 bis 100, bevorzugt 10 bis 30.

Das Molekulargewicht der eingesetzten Polyethylenimine liegt insbesondere im Bereich von 100 bis 800.000 g/mol, bevorzugt im Bereich von 100 bis 500.000 g/mol, bevorzugt im Bereich von 100 bis 50.000 g/mol, besonders bevorzugt im Bereich von 500 bis 10.000 g/mol. Die Angaben können sich jeweils sowohl auf das zahlenmittlere Molekulargewicht, auf das gewichtsmittlere Molekulargewicht, oder das viskositätsmittlere Molekulargewicht beziehen, insbesondere beziehen sich die Angaben auf das zahlenmittlere Molekulargewicht.

Es kann sich insbesondere um verzweigte Polyethylenimine handeln. Weiterhin ist der Einsatz von alkoxylierte Polyethyleniminen (z.B. ethoxylierten oder propoxylierten Polyethyleniminen) bevorzugt mit 2 bis 20 Alkoxy-Einheiten möglich.

Weiterhin ist der Einsatz eines copolymeren Polyaminwachses als Polyamin-Komponente (P) möglich. Polyaminwachse stellen Copolymere dar, welche aus Vinylamin-Einheiten und Alkyleinheiten, wie Ethyl und Propyl, aufgebaut sind. Diese Copolymere können etwa durch Copolymerisation von Vinylamin-analogen Monomerbausteine (z.B. Vinylformamid) und Ethylen und/oder Propylen erhalten werden.

Insbesondere können als Polyamin-Komponente (P) Polyvinylamine eingesetzt werden. Polyvinylamine können insbesondere anhand der Struktureinheit der allgemeinen Formel (P2) beschrieben werden 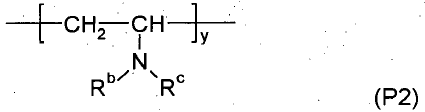 wobei
y insbesondere eine ganze Zahl von 4 und 10.000, bevorzugt von 10 bis 5.000, besonders bevorzugt von 10 bis 1.000 ist;
R^{b} und R^{c} unabhängig voneinander ausgewählt sind aus Wasserstoff, C₁₋₆ Alkyl und Benzyl.

Insbesondere werden im Rahmen der vorliegenden Erfindung verzweigte Polyvinylamine eingesetzt.

Das Molekulargewicht der eingesetzten Polyvinylamine liegt insbesondere im Bereich von 100 bis 500.000 g/mol, bevorzugt von 500 bis 250.000 g/mol, bevorzugt im Bereich von 1.000 bis 250.000 g/mol. Die Angaben können sich jeweils sowohl auf das zahlenmittlere Molekulargewicht, auf das gewichtsmittlere Molekulargewicht, oder das viskositätsmittlere Molekulargewicht beziehen, insbesondere beziehen sich die Angaben auf das zahlenmittlere Molekulargewicht.

In einer weiteren Ausführungsform der Erfindung können als Polyamin-Komponente (P) Polyvinylimidazole eingesetzt werden. Polyvinylimidazole können insbesondere durch eine Struktureinheit der allgemeinen Formel (P3) beschrieben werden: 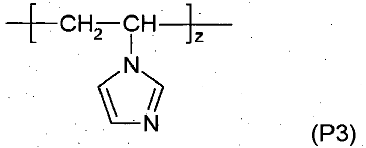 wobei
z insbesondere eine ganze Zahl von 4 und 10.000, bevorzugt von 10 bis 5.000, besonders bevorzugt von 10 bis 1.000 ist

In einer bevorzugten Ausführungsform enthält die oben beschriebene wässrige Zusammensetzung ein quarternisiertes Polyvinylimidazol. Insbesondere kann eine Quaternisierung durch Anlagerung eines C₁₋₆-Alkylrest und/oder eines Benzylrest an mindestens einem der Stickstoffatom des Polyvinylimidazoles erfolgen, insbesondere kann die Quaternisierung mit einem gängigen Methylierungs-Reagenz (z.B. Methylhalogenid) erfolgen.

Das Molekulargewicht der eingesetzten Polyvinylimidazole liegt insbesondere im Bereich von 200 bis 1.000.000 g/mol, bevorzugt im Bereich von 1.000 bis 500.000 g/mol, bevorzugt im Bereich von 1.000 bis 200.000 g/mol. Die Angaben können sich jeweils sowohl auf das zahlenmittlere Molekulargewicht, auf das gewichtsmittlere Molekulargewicht, oder das viskositätsmittlere Molekulargewicht beziehen, insbesondere beziehen sich die Angaben auf das zahlenmittlere Molekulargewicht.

Es ist weiterhin vorteilhaft, eine Kombination von mindestens einem Polyamin (P) und mindestens einem mehrwertigem Metallion (M) als kationischen Vernetzer in dem oben beschriebenen Verfahren einzusetzen. Das mehrwertiges Metallion kann insbesondere ausgewählt werden aus der Gruppe bestehend aus Mg²⁺, Ca2⁺, Zn²⁺, Mn²⁺, Fe²⁺, Cr³⁺, Al³⁺, Ti⁴⁺, Zr⁴⁺, Ce³⁺ und Ce⁴⁺, bevorzugt Zn²⁺, Mg²⁺, Ca²⁺, Mn²⁺ und Al³⁺. Die entsprechende Verbindung wird zum Beispiel in einer Menge von 0,01 bis 25 Gew.-%, bevorzugt 0,5 bis 10 Gew.-% und besonders bevorzugt 1 bis 5 Gew.-% eingesetzt.

Optional kann die im erfindungsgemäßen Verfahren eingesetzte wässrige Zusammensetzung mindestens ein Tensid (T), bevorzugt ein nicht-ionisches und/oder kationisches Tensid, besonders bevorzugt ein kationisches Tensid (z.B. quarternäre Alkyl-Ammoniumverbindungen) enthalten.

Bevorzugt kann die wässrige Zusammensetzung mindestens ein kationisches Tensid (T) enthalten, wobei es sich um eine quarternäre Alkyl-Ammoniumverbindungen handelt und die Alkylreste der Ammoniumverbindung insbesondere ausgewählt sind aus verzweigten oder unverzweigten Alkylresten mit 1 bis 20 C-Atomen, insbesondere aus den Resten: Stearyl, Palmityl, Methyl, Ethyl und Butyl. Insbesondere können als kationische Tenside C₁₂₋₁₄-Alkyl-Trimethylammoniumsulfate eingesetzt werden.

Durch Zugabe eines kationischen oder nicht-ionischen Tensides kann das Spreitverhalten der wässrigen Passivierungszusammensetzung auf der Metalloberfläche verbessert und die Korrosionsbeständigkeit erhöht werden.

In einer weiteren Ausführungsform kann die wässrige Zusammensetzung optional mindestens ein Tensid (T) enthalten ausgewählt aus ethoxylierten C₈₋₂₀ Alkoholen umfassend einen linearen oder verzweigten, gesättigten oder ungesättigten Alkylrest und umfassend 2 bis 14, bevorzugt 4 bis 10, Ethylenoxid-Einheiten.

Das Tensid (T) kann im Bereich von 0 bis 2 Gew.-%, bevorzugt von 0 bis 1 Gew.-% in der wässrigen Zusammensetzung enthalten sein.

Als Lösemittel (L) wird in den Zusammensetzungen bevorzugt ausschließlich Wasser eingesetzt. Das Lösemittel kann neben Wasser auch mit Wasser mischbare, organische Lösemittel in geringen Mengen umfassen. Insbesondere können geringe Mengen an organischen Lösemittel eingesetzt werden, ausgewählt, insbesondere aus der Gruppe: Monoalkohole wie Methanol, Ethanol oder Propanol, höhere Alkohole wie Ethylenglykol oder Polyetherpolyole, Etheralkohole wie Butylglykol oder Methoxypropanol und N-Methylpyrrolidon. Im Regelfalle beträgt die Menge des Wassers mindestens 80 Gew.-% (bezogen auf die Gesamtmenge an Lösemittel), bevorzugt mindestens 90 Gew.-% (bezogen auf die Gesamtmenge an Lösemittel) und häufig mindestens 95 Gew.-% (bezogen auf die Gesamtmenge an Lösemittel).

Das Lösemittel ist bevorzugt in einer Menge von 20 bis 89 Gew.-% in der oben beschriebenen wässrigen Zusammensetzung enthalten, bevorzugt von 20 bis 80 Gew.-%, bevorzugt von 20 bis 70 Gew.-%, bevorzugt von 20 bis 60 Gew.-%, bevorzugt von 20 bis 50 Gew.-%.

Als weitere Komponenten kann die oben beschriebene wässrige Zusammensetzung mindestens eine der folgenden Komponenten enthalten:
a. Phosphationen, insbesondere in einer Menge von 0 bis 10 Gew.-%, bevorzugt von 0,1 bis 5 Gew.-%;
b. anorganische und organische Säuren (z.B. Phosphorsäure, Salpetersäure, Methansulfonsäure Ameisensäure, Essigsäure), insbesondere in einer Menge von 0 bis 10 Gew.-%;
c. mehrwertige Metallionen (z.B. Zn²⁺, Mn²⁺, Ca²⁺, Al³⁺, Mg²⁺ etc.), insbesondere in einer Menge von 0 bis 10 Gew.-%, bevorzugt 0,01 bis 2 %;
d. Solubilisatoren / Co-Tenside (anionisch, nichtionisch, kationisch), insbesondere in einer Menge von 0 bis 1 Gew.-%;
e. Entschäumer (z.B. Silane, modifizierte Silane, z.B. Surfynol 104, BASF), insbesondere in einer Menge von 0,001 bis 0,1 Gew.-%;
f. Entlüfter (z.B. langkettige Alkohole), insbesondere in einer Menge von 0,001 bis 0,1 Gew.-%;
g. Aktivatoren (z.B. Nitrat, Nitrobenzolsulfonat), insbesondere in einer Menge von 0 bis 2 Gew.-%, bevorzugt von 0 bis 0,5 Gew.-%;
h. Wasserstofffänger (z.B. Hydroxylammoniumsalze, Wasserstoffperoxid (H₂O₂), Nitrat), insbesondere in einer Menge von 0 bis 2 Gew.-%, bevorzugt von 0 bis 0,5 Gew.-%;
i. Co-Solventien (z.B. 2-Ethylhexylethoxylat, Butyldiglykol, Propyldiglykol), insbesondere in einer Menge von 0 bis 5 Gew.-%, bevorzugt von 0,1 bis 2 Gew.-%;
j. Korrosionsschutzadditive (z.B. stickstoffhaltige Heterozyklen, Phosphorsäureester, organische Mono-, Di- und Tricarbonsäuren), insbesondere in einer Menge von 0,01 bis 5 Gew.-%, bevorzugt von 0,1 bis 2 Gew.-%;
k. Komplexbildner (z.B. Aminoessigsäurederivate, Phosphonsäurederivate), insbesondere in einer Menge von 0,01 bis 5 Gew.-%, bevorzugt von 0,1 bis 1 Gew.-%.

Die Menge an zusätzlichen Komponenten (K) sollte in der Summe nicht mehr als 30 Gew.-%, insbesondere nicht mehr als 20 Gew.-%, bevorzugt nicht mehr als 10 Gew.-% und insbesondere bevorzugt nicht mehr als 5 Gew.-% (jeweils bezogen auf die GesamtZusammensetzung) betragen.

Die im erfindungsgemäßen Verfahren eingesetzte wässrige Zusammensetzung weist in der Regel einen pH-Wert (bei Raumtemperatur) von kleiner 2 auf, insbesondere im Bereich von 0,5 bis 2, insbesondere im Bereich von 0,7 bis 1,5, besonders bevorzugt im Bereich von 0,7 bis 1. Der pH-Wert der Zubereitung hängt von der Art und Konzentration der verwendeten Polymere (X) ab. Er kann jedoch durch Zugabe weiterer basischer oder saurer Komponenten in die Formulierung beeinflusst werden. So kann die eingesetzte Formulierung neben den sauren Polymeren noch anorganische oder organische Säuren oder Mischungen davon enthalten. Die Auswahl einer derartigen Säure ist nicht begrenzt, vorausgesetzt, es treten keine negativen Effekte zusammen mit den anderen Komponenten der wässrigen Zusammensetzung auf.

Beispiele geeigneter Säuren umfassen Phosphorsäure, Phosphonsäure oder organische Phosphonsäuren wie 1-Hydroxyethan-1,1-diphosphonsäure (HEDP), 2-Phos-phonobutan-1,2,4-tricarbonsäure (PBTC), Aminotri(methylenphosphonsäure) (ATMP), Ethylendiamintetra(methylenphosphonsäure) (EDTMP) oder Diethylentriaminpenta(methylenphosphonsäure) (DTPMP), Sulfonsäuren wie Methansulfonsäure, Amidosulfonsäure, p-Toluolsulfonsäure, m-Nitrobenzolsulfonsäure und Derivate davon, Salpetersäure, Ameisensäure oder Essigsäure. Bevorzugt sind phosphorhaltige Säuren wie Phosphorsäure (H₃PO₄), Phosphonsäure (H₃PO₃), die genannten organischen Phosphonsäuren, Salpetersäure (HNO₃) oder Methansulfonsäure. Bevorzugt kann es sich um Phosphorsäure (H₃PO₄) oder eine andere phosphorhaltige Säure handeln.

Die Acidität der eingesetzten wässrigen Zusammensetzungen kann auch im Wesentlichen durch die sauren Gruppen des Polymers (X) hervorgerufen werden. Die Menge an zusätzlichen Säuren neben den Polymeren (X) in der wässrigen Zusammensetzung überschreitet daher insbesondere 30 Gew.-% (bezüglich der Menge aller Komponenten in der Zusammensetzung) nicht. Bevorzugt sollten 25 Gew.-%, besonders bevorzugt 20 Gew.-% und ganz besonders bevorzugt 10 Gew.-% nicht überschritten werden. In einer zweiten, besonders bevorzugten Ausführungsform der Erfindung sind keine zusätzlichen Säuren vorhanden. Die Säuregruppen des Polymers (X) liegen bevorzugt als freie Säuregruppen vor.

In einer bevorzugten Ausführungsform der Erfindung kann die eingesetzte wässrige Zusammensetzung als zusätzliche Komponente mindestens eine Art von mehrwertigen Metallionen ausgewählt aus der Gruppe bestehend aus Zn²⁺, Mg²⁺, Ca²⁺, Mn²⁺ und Al³⁺ enthalten. Bevorzugt handelt es sich um Zn²⁺ und/oder Mg²⁺, besonders bevorzugt um Zn²⁺. Bevorzugt umfasst die Zusammensetzung keine weiteren Metallionen. Insbesondere können die Ionen Komplexbindungen zu den sauren Gruppen des Polymers aufweisen. Falls vorhanden, beträgt die Menge an Zusätzen von Verbindungen mit mehrwertigen Metallionen (ausgewählt aus der Gruppe bestehend aus Zn²⁺, Mg²⁺, Ca²⁺, Mn²⁺ und Al³⁺) 0,01 bis 10 Gew.-%, bevorzugt 0,01 bis 2 %.

Falls Metallionen oder Metallverbindungen anwesend sind, handelt es sich bevorzugt um Zusammensetzungen, welche keine Chromverbindungen enthalten. Weiterhin sollten bevorzugt keine Metallfluoride bzw. komplexen Metallfluoride anwesend sein. Die erfindungsgemäße Passivierung ist also bevorzugt eine chromfreie Passivierung, besonders bevorzugt eine Chrom- und Fluorid-freie Passivierung.

Die erfindungsgemäß einzusetzenden wässrigen Zusammensetzungen können durch Mischen der oben beschriebenen Komponenten erhalten werden.

Als zu behandelnde Metalloberfläche ist im Allgemeinen jede beliebige Metalloberfläche einsetzbar, es handelt sich insbesondere um Oberflächen aus unedlen Metallen. Es kann sich beispielsweise um Oberflächen enthaltend bzw. bestehend im Wesentlichen aus Eisen, Eisenlegierungen, Stahl, Zn, Zn-Legierungen, Al oder Al-Legierungen, Sn und Sn-Legierungen, Mg oder Mg Legierungen handeln. Bei den Stählen kann es sich sowohl um niedrig legierte wie um hochlegierte Stähle handeln. Häufig handelt es sich bei der Metalloberfläche um Aluminium oder Aluminium-Legierungen bzw. um Zink oder Zinklegierungen, wobei eine Oberfläche aus Zink oder Zink-Legierungen im Allgemeinen durch einen Verzinkungsvorgang eines metallischen Werkstoffs wie Eisen oder Stahl erhalten wird.

Das erfindungsgemäße Verfahren eignet sich insbesondere zum Passivieren von metallischen Oberflächen aus Zn, Zn-Legierungen, Al oder Al-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder AI-Legierungen beschichteten Körpern handeln, wobei die Körper aus anderen Materialien, beispielsweise aus anderen Metallen, Legierungen, Polymeren oder Verbundwerkstoffen bestehen können. Insbesondere kann es sich um die Oberfläche von verzinktem Eisen oder Stahl handeln. Der Begriff "verzinkt" umfasst auch das Beschichten mit einer Zink-Legierung, insbesondere die Feuerverzinkung mit Zn-Al-Legierungen und die elektrolytische Verzinkung mit Zn-Ni, Zn-Fe, Zn/Mn- und Zn/Co-Legierungen.

Bevorzugt betrifft die vorliegende Erfindung ein Verfahren zum Passivieren einer metallischen Oberfläche, dadurch gekennzeichnet, dass es sich bei der metallischen Oberfläche um Oberflächen bestehend im Wesentlichen aus einem Metall oder mehreren Metallen ausgewählt aus der Gruppe bestehend aus Zink (Zn), Aluminium (Al) und Magnesium (Mg) handelt.

Zn- oder AI-Legierungen sind dem Fachmann bekannt. Je nach dem gewünschten Anwendungszweck wählt der Fachmann Art und Menge von Legierungsbestandteilen aus. Typische weitere Bestandteile von Zink-Legierungen umfassen insbesondere Al, Mg, Pb, Si, Mg, Sn, Cu und Cd. Es kann sich auch um Al/Zn-Legierungen handeln, bei denen Al und Zn in annähernd gleicher Menge vorhanden sind. Bei den Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische weitere Bestandteile von Aluminium-Legierungen sind insbesondere Mg, Mn, Si, Zn, Cr, Zr, Cu und Ti.

In einer bevorzugten Ausführungsform des Verfahrens handelt es sich um die Oberfläche eines Bandmetalls, bevorzugt aus Aluminium oder einer Aluminium-Legierung oder aus Eisen bzw. Stahl, insbesondere Bänder aus elektrolytisch oder heiß verzinktem Stahl.

Oftmals handelt es sich um die Oberfläche von Formkörpern, welche durch Verarbeitungsvorgänge wie Trennen, Umformen und/oder Fügen aus den genannten Bandmetallen erhältlich sind. Beispiele sind Automobilkarosserien oder Teile davon, LKW-Aufbauten, Verkleidungen für Haushaltgeräte (wie beispielsweise Waschmaschinen, Geschirrspülmaschinen, Wäschetrockner, Gas und Elektroherde, Mikrowellengeräte, Tiefkühltruhen oder Kühlschränke), Verkleidungen für technische Geräte oder Einrichtungen (wie beispielsweise Maschinen, Schaltschränke, Computergehäuse oder dergleichen), Bauelemente im Architekturbereich (wie Wandteile, Fassadenelemente, Deckenelemente, Fenster oder Türprofile oder Trennwände), Möbel aus metallischen Materialien (wie Metallschränke oder Metallregale).

Die zu behandelnden metallischen Oberflächen können auch dünne oxidische, hydroxidische und/oder carbonatische Oberflächenschichten oder Schichten ähnlichen Aufbaues aufweisen. Derartige Schichten bilden sich auf metallischen Oberflächen im Kontakt mit der Atmosphäre üblicherweise von alleine, und sind im Begriff "metallische Oberfläche" mit eingeschlossen.

In einer bevorzugten Ausführungsform betrifft das Verfahren ein kontinuierliches Verfahren zur Passivierung von verzinkten Stahlbändern in einer Bandbeschichtungsanlage im Anschluss an die Verzinkung (z.B. elektrolytische Verzinkung oder Feuerverzinkung).

Mit dem erfindungsgemäßen Verfahren können einseitig oder beidseitig verzinkte Stahlbänder passiviert werden. Verzinkte Stahlbänder weisen eine Dicke von 0,2 bis 0,3 mm und Breiten von 0,5 bis 2,5 m auf. Verzinkte Stahlbänder sind für verschiedene Anwendungen kommerziell erhältlich. Der Fachmann wählt je nach dem gewünschten Verwendungszweck ein geeignetes Stahlband aus.

Generell können zur Ausführung des erfindungsgemäßen Verfahrens die bekannten Bandbeschichtungsanlagen beruhend z.B. auf Abquetschwalzen-Technologie oder auf der "Roll-Coater-Technologie", verwendet werden. Geeignete Anlagen werden beispielsweise in WO 2009/047209 beschrieben.

Das erfindungsgemäße Verfahren zur Passivierung von verzinkten Stahlbändern wird bevorzugt mittels eines kontinuierlichen Verfahrens unter Verwendung von Abquetsch-Walzen vorgenommen. Hierzu wird das verzinkte Stahlband mittels Antriebsrollen bewegt. Die Passivierungs-Zusammensetzung wird z.B. mittels einer Sprühstation auf das Stahlband aufgesprüht und bildet einen feuchten Film. Mittels einer oder mehrerer Abquetschwalzen wird überschüssige Passivierungs-Zusammensetzung abgequetscht. Es entsteht ein dünner, feuchter Film, der anschließend in einem Trockner getrocknet werden kann.

Die Stahlbänder können typischerweise mit einer Geschwindigkeit von 80 bis 200 m/min, bevorzugt 50 bis 150 m/min durch die Anlage gefahren werden. Die Behandlungsdauer kann vom Fachmann je nach den gewünschten Eigenschaften der Passivierungsschicht und andere Faktoren festgelegt werden. Bei kontinuierlichen Verfahren ist es vorteilhaft, dass die maximale Zeitspanne zwischen Aufbringen der wässrigen Zusammensetzung auf die metallische Oberfläche des Stahlbandes und der Trocknung des Films 1 bis 60 s beträgt.

In dem oben beschriebenen erfindungsgemäßen Verfahren kann die metallische Oberfläche mit der wässrigen Zusammensetzung, insbesondere durch Sprühen, Tauchen oder Aufwalzen in Kontakt gebracht werden.

In einer bevorzugten Ausführungsform umfasst das oben beschriebene Verfahren zur Passivierung einer metallischen Oberfläche die folgenden Schritte
i) gegebenenfalls Reinigung der metallischen Oberfläche zur Entfernung von Ölen, Fetten, Schmutz und/oder Oxidfilmen;
ii) gegebenenfalls Wasche der metallischen Oberfläche mit Wasser;
iii) in Kontakt Bringen einer metallischen Oberfläche mit einer oben beschriebenen wässrigen Zusammensetzung; wobei die wässrige Zusammensetzung in Form eines Nassfilm auf die Oberfläche aufgebracht wird;
iv) Trocknen des in Schritt iii) erhaltenen Nassfilms, bevorzugt bei Temperaturen im Bereich von 20 bis 250 °C;
v) gegebenenfalls Nachbehandlung der passivierten Oberfläche.

In einer bevorzugten Ausführungsform bezieht sich die Erfindung auf ein oben beschriebenen Verfahren, dadurch gekennzeichnet, dass die wässrige Zusammensetzung auf die metallische Oberfläche in Form eines Nassfilms aufgebracht wird, wobei die wässrige Zusammensetzung in einem Auftragsgewicht im Bereich von 0,3 bis 2 g/m², bevorzugt 0,3 bis 1 g/m², insbesondere 0,4 bis 0,8 g/m² (bezogen auf die Summe der Feststoffe der wässrigen Zusammensetzung) auf die metallische Oberfläche aufgebracht wird.

Die mit dem beschriebenen erfindungsgemäßen Verfahren erhältlichen Passivierungsschichten weisen bevorzugt eine Schichtdicke im Bereich von 1 bis 3 µm, bevorzugt 1 bis 2 µm und ein Auftragsgewicht im Bereich von 0,3 bis 2 g/m², bevorzugt 0,3 bis 1 g/m², insbesondere bevorzugt 0,4 bis 0,8 g/m² (bezogen auf die Summe der Feststoffe der wässrigen Zusammensetzung) auf.

In einem weiteren Aspekt bezieht sich die vorliegende Erfindung auf eine Zusammensetzung zum Passivieren einer metallischen Oberfläche enthaltend

| | |
|---|---|
| a) 10 bis 40 Gew.-% | mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst; |
| b) 0,5 bis 5 Gew.-% | mindestens eines Polyamins (P) umfassend mindestens zwei Ammonium-Gruppen ausgewählt aus Polyethyleniminen, alkoxylierten Polyethyleniminen, quaternisierten Polyethyleniminen, Polyvinylimidazolen, alkoxylierten Polyvinylimidazole, quaternisierten Polyvinylimidazolen, Polyvinylaminen, alkoxylierten Polyvinylaminen und quaternisierten Polyvinylaminen, insbesondere ausgewählt aus Polyethyleniminen, alkoxylierten Polyethyleniminen (z.B. propoxylierten und/oder ethoxylierten Polyethyleniminen) Polyvinylaminen, Polyvinylimidazolen und quarternisierten Polyvinylimidazolen, insbesondere ausgewählt aus Polyethyleniminen, Polyvinylamine und Polyvinylimidazolen; |
| c) 20 bis 89 Gew.-% | mindestens eines Lösemittels (L), enthaltend mindestens 80 Gew.-% Wasser, |
| d) optional 0,1 bis 1 Gew.-% | mindestens eines Tensids (T); |
| e) optional 0 bis 30 Gew.-% | weitere Komponenten (K); |

wobei der pH-Wert der Zusammensetzung im Bereich von 0,5 bis 2; insbesondere in Bereich von 0,7 bis 1,5; besonders bevorzugt im Bereich von 0,7 bis 1; liegt.

Bevorzugt enthält die erfindungsgemäße wässrige Zusammensetzung 0,5 bis 5 Gew.-%, insbesondere 1 bis 3 Gew.-% mindestens eines Polyethylenimins als Polyamin-Komponente (P), wobei das Polyethylenimin ein mittleres Molekulargewicht (bezogen auf das viskositätsmittlere Molekulargewicht) von 100 bis 500.000 g/mol, besonders bevorzugt im Bereich von 500 bis 10.000 g/mol, besonders bevorzugt im Bereich von 500 bis 8.000 g/mol aufweist.

Darüber hinaus gelten für die genannten Komponenten (Polymer (X), Polyamin (P), Tensid (T), Lösemittel (L), weitere Komponenten (K)) die weiter oben im Zusammenhang mit dem erfindungsgemäßen Verfahren beschriebenen bevorzugten Ausführungsformen.

Die vorliegende Erfindung ist ferner gerichtet auf ein Verfahren zur Herstellung einer oben beschriebenen Zusammensetzung umfassend die folgenden Schritte:
a) Lösen des Polyamins (P) in einem Lösemittel (L), insbesondere Wasser, und Einstellen des pH-Wertes auf einen Wert von 0,5 bis 2 durch Zugabe von Säuren (insbesondere ausgewählt aus Phosphorsäure, Phosphonsäure, Schwefelsäure und Methansulfonsäure) bis eine klare Lösung erhalten wird;
b) Lösen des Polymers (X) in einem Lösemittel (L), insbesondere Wasser;
c) Mischen der Polyamin (P) - Lösung aus Schritt a) und der Polymer (X) - Lösung aus Schritt b)
d) optional Zugabe mindestens eines Tensids (T) und/oder weitere Komponenten (K).

Darüber hinaus gelten für die genannten Komponenten (Polymer (X), Polyamin (P), Tensid (T), Lösemittel (L), weitere Komponenten (K)) die weiter oben im Zusammenhang mit dem erfindungsgemäßen Verfahren beschriebenen bevorzugten Ausführungsformen.

Die vorliegende Erfindung ist weiterhin gerichtet auf die Verwendung der oben beschriebenen Zusammensetzung zur Passivierung einer metallischen Oberfläche, insbesondere einer metallischen Oberfläche bestehend im Wesentlichen aus einem oder mehreren Metallen ausgewählt aus der Gruppe bestehend aus Zink (Zn), Aluminium (Al) und Magnesium (Mg), insbesondere aus verzinkter Stahl. Insbesondere betrifft die Erfindung die Verwendung der oben beschriebenen Zusammensetzung zur Passivierung eines verzinkten Stahlbandes in einem kontinuierlichen Verfahren.

Ein weiterer Gegenstand der vorliegenden Erfindung ist eine Beschichtung auf einer metallischen Oberfläche erhältlich durch in Kontakt Bringen der metallischen Oberfläche mit einer wässrigen Zusammensetzung enthaltend die folgenden Komponenten:
a) mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst;
b) 0,5 bis 5 Gew.-% (bezogen auf die gesamte wässrige Zusammensetzung) mindestens eines Polyamins (P) umfassend mindestens zwei Ammonium-Gruppen;
c) mindestens ein Lösemittel (L), enthaltend mindestens 80 Gew.-% Wasser;
d) optional mindestens ein Tensid (T);
e) optional mindestens eine weitere Komponente (K);
wobei der pH-Wert der Zusammensetzung im Bereich von 0,5 bis 2, insbesondere in Bereich von 0,7 bis 1,5; besonders bevorzugt im Bereich von 0,7 bis 1 liegt.

Es gelten für die genannten Komponenten (Polymer (X), Polyamin (P), Tensid (T), Lösemittel (L), weitere Komponenten (K)) die weiter oben im Zusammenhang mit dem erfindungsgemäßen Verfahren beschriebenen bevorzugten Ausführungsformen.

Die vorliegende Erfindung wird an Hand der folgenden experimentellen Beispiele näher erläutert.

### Beispiel 1:

Es wurden jeweils wässrige Lösungen eines säuregruppenhaltigen Polymers (Polymer X) aufgebaut aus ca. 50 Gew.-% Acrylsäure (Monomer M1), ,ca. 30 Gew.-% Vinylphosphonsäure (Monomer M2), ca. 20 Gew.-% Hydroxyethylacrylat (Monomer M3), das wie in WO 2008/612248 beschrieben hergestellt wurde, verwendet. Es wurden Ausgangs-Formulierungen aus ca. 20 Gew.-% des säuregruppenhaltigen, Polymers (Polymer (X)), 85%ig Phosphorsäure (H₃PO₄), Magnesiumphosphat Mg₃(PO₄)₂ * 8 H₂O, durch Lösen bzw. Dispergieren der Komponenten in Wasser und Vermischen der Komponenten hergestellt. Die genauen Mengen (Angabe in Gew.-%) der Komponenten der Ausgangsformulierung sind in Tabelle 2 zusammengefasst. Der pH-Wert der Ausgangsformulierung lag im Bereich von 0,5 bis 2.

Zu der Ausgangsformulierung wurden jeweils unterschiedliche Mengen an verschiedenen Polyaminen (P) zugegeben. Hierzu wurde die jeweilige Polyamin-Lösung mit 70 %iger Methansulfonsäure (MSA) auf den gleichen pH-Wert eingestellt wie die wässrige Lösung des säuregruppenhaltigen Polymers (oben beschriebene Ausgangsformulierung).

Die Formulierungen C1 bis C4 sowie V1 bis V13 wurden durch Zugabe der in Tabelle 1 beschriebenen Polyamine (P) zu der Ausgangsformulierung hergestellt. Die genauen Zusammensetzungen und Mengen sind in den Tabellen 2 und 3 zusammengestellt.

**Tabelle 1: Beschreibung der eingesetzten Polyamine (P)**

| Nr. | Beschreibung | Mittlere Molekulargewicht (Mₙ) [g/mol] |
|---|---|---|
| PEI1 | Triethylentetramine | |
| PEI2 | Pentaethylenhexamin | |
| PEI3 | Polyethylenimin | 800 |
| PEI4 | Polyethylenimin | 1300 |
| PEI5 | Polyethylenimin | 25000 |
| PEI6 | Polyethylenimin | 750.000 |
| PEI7 | Propoxyliertes Polyethylenimin | 5000 |
| PVA11 | Polyvinylamin | 10.000 |
| PVA2 | Polyvinylamin | 100.000 |
| PVA3 | Polyvinylamin | größer 100.000 |
| PVI1 | Polyvinylimidazol | 100.000 |
| PVI2 | quarternisiertes Polyvinylimidazol | 200.000 |

In einigen Fällen wurde als Tensid (T) ein kationisches Tensid T1 (quarternisiertes Alkylamin) zugegeben.

**Tabelle 2: Beschichtungsformulierungen C1 - V4**

| | C1 Ref. | C2 | C3 | C4 | V1 | V2 | V3 | V4 |
|---|---|---|---|---|---|---|---|---|
| Polymer X | 22,5 | 22,5 | 22,5 | 22,5 | 22,5 | 22,5 | 22,5 | 18,7 |
| H₃PO₄ | 1 | 1 | 1 | 1 | 1 | 1 | 1 | 4 |
| Mg₃(PO₄)2x 8H₂O | 1,4 | 1,4 | 1,4 | 1,4 | 1,4 | 1,4 | 1,4 | 1,4 |
| MSA | | | 30 | 10 | 10 | 10 | 10 | 10 |
| PEI 1 | | | | | 2,5 | | | |
| PEI2 | | | | | | 2,5 | | |
| PEI 3 | | 0,1 | 10 | | | | 2,5 | |
| PEI 4 | | | | | | | | 2,5 |

**Tabelle 3: Beschichtungsformulierungen V5 bis V13**

| | V5 | V6 | V7 | V8 | V9 | V10 | V11 | V12 | V13 |
|---|---|---|---|---|---|---|---|---|---|
| Polymer X | 22,5 | 22,5 | 22,5 | 22,5 | 22,5 | 22,5 | 22,5 | 22,5 | 22,5 |
| H₃PO₄ | 1 | 1 | 1 | 1 | 1 | 1 | 1 | 1 | 1 |
| Mg₃(PO₄)₂x 8H₂O | 1,4 | 1,4 | 1,4 | 1,4 | 1,4 | 1,4 | 1,4 | 1,4 | 1,4 |
| MSA | 10 | 10 | 5 | 2,5 | 2,5 | 2,5 | 5 | 1 | 10 |
| PEI 1 | | | | | | | | | |
| PEI 2 | | | | | | | | | 2,5 |
| PEI 3 | | | | | | | | | |
| PEI 4 | | | | | | | | | |
| PEI 5 | 2,5 | | | | | | | | |
| PEI 6 | | 2,5 | | | | | | | |
| PEI 7 | | | 2,5 | | | | | | |
| PVI1 | | | | 2,5 | | | | | |
| PVI2 | | | | | 2,5 | | | | |
| PVA1 | | | | | | 2,5 | | | |
| PVA2 | | | | | | | 2,5 | | |
| PVA3 | | | | | | | | 2,5 | |
| T1 | | | | | | | | | 0,5 |

### Beispiel 2:

Unter Verwendung der in Beispiel 1 beschriebenen Zusammensetzungen X1 bis X4 sowie V1 bis V13 wurden beschichtete Prüfbleche aus heiß verzinktem Stahl (Gardobond OE HDG 3, 105 x 190 mm) hergestellt.

Als Vorbehandlung wurden die Prüfbleche in einer milden alkalischen Reinigerlösung (Surtech 133, Fa. Surtech) für ca. 30 Sekunden getaucht, sofort mit voll entsalztem Wasser abgespült und anschließend mit Stickstoff getrocknet.

Die gereinigten Bleche wurden bei Raumtemperatur für jeweils 1 Sekunde in die in den Tabellen 2 und 3 aufgeführten Formulierungen getaucht, mit einem Walzensystem abgequetscht und für 12 s bei 160°C im Trockenschrank getrocknet. Die Peak-Metall-Temperatur (PMT) im Zuge der Trocknung überstieg hierbei nicht 50°C.

Die so erhaltenen beschichteten Prüfbleche wurden hinsichtlich ihrer Korrosionsbeständigkeit mit Hilfe von verschiedenen in Beispiel 3 beschriebenen Testverfahren untersucht. Die Testergebnisse sind in den Tabellen 4 und 5 zusammengefasst.

**Tabelle 4: Testergebnisse zur Korrosionsbeständigkeit, C1 - C4 und V1 bis V4**

| | | C1 Ref. | C2 | C3 | C4 | V1 | V2 | V3 | V4 |
|---|---|---|---|---|---|---|---|---|---|
| Auflage | [g/m²] | 0,7 | 0,8 | 0,8 | 0,7 | 0,7 | 0,7 | 0,8 | 0,8 |
| Salzsprühtest DIN ISO 9227 | 24h | 9 | 9 | 9 | 9 | 9 | 10 | 10 | 10 |
| | 48h | 8 | 8 | 7 | 7 | 8 | 8 | 10 | 10 |
| | 72h | 4 | 3 | 3 | 4 | 6 | 6 | 8 | 9 |
| KWT (DIN ISO 6270-2 | 21 Zyklen | 0 | 0 | 4 | 3 | 2 | 1 | 0 | 0 |
| Stacktest | 1 Tag | 2 | 2 | 3 | 2 | 1 | 1 | 0 | 0 |
| | 7 Tage | 4 | 4 | 4 | 4 | 3 | 3 | 1 | 1 |
| | 14 Tage | 4 | 4 | 4 | 4 | 4 | 4 | 2 | 2 |

**Tabelle 5: Testergebnisse zur Korrosionsbeständigkeit, V5 bis V13**

| | | V5 | V6 | V7 | V8 | V9 | V10 | V11 | V12 | V13 |
|---|---|---|---|---|---|---|---|---|---|---|
| Auflage | [g/m²] | 0,8 | 0,8 | 0,8 | 0,8 | 0,8 | 0,8 | 0,7 | 0,7 | 0,5 |
| Salzsprühtest DIN ISO 9227 | 24h | 10 | 10 | 9 | 10 | 9 | 9 | 9 | 10 | 10 |
| | 48h | 10 | 10 | 8 | 10 | 8 | 8 | 8 | 10 | 10 |
| | 72h | 9 | 8 | 7 | 8 | 6 | 6 | 6 | 7 | 9 |
| KWT / DIN ISO 6270-2 | 21 Zyklen | 0 | 0 | 1 | 0 | 0 | 0 | 1 | 2 | 0 |
| Stacktest | 1 Tag | 0 | 0 | 1 | 1 | 0 | 1 | 1 | 1 | 0 |
| | 7 Tage | 1 | 1 | 2 | 2 | 1 | 3 | 3 | 2 | 1 |
| | 14 Tage | 2 | 2 | 3 | 4 | 2 | 4 | 4 | 4 | 2 |

Es zeigt sich, dass Beschichtungen mit den erfindungsgemäßen Zusammensetzungen (V1 bis V13) in allen Testmethoden eine deutlich bessere Korrosionsbeständigkeit aufweisen im Vergleich zu Prüfblechen, die mit einer Vergleichslösung beschichtet wurden (C2 bis C4) oder die nicht beschichtet wurden (C1).

### Beispiel 3:

Zur Beurteilung der Passivierungsschicht wurden die im Folgenden beschriebenen und in den Tabellen 4 und 5 zusammengefassten Testverfahren durchgeführt.

### a) Salzsprühtest (DIN EN ISO 9227)

Die Güte des Korrosionsschutzes der wie in Beispiel 2 beschichteten Prüfbleche wurde im neutralen Salzsprühtest gemäß DIN EN ISO 9227 bewertet, indem nach vorgegebenen Standards Bewertungszahlen von 0 bis 10 vergeben werden. Die Bewertungszahl (oder auch Bewertungsgrad) ist ein Maß für die Entstehung von Weißrost auf dem Blech. Je höher die Bewertungszahl, desto geringer der Anteil der korrodierten Fläche (Fehlerfläche) in % bezogen auf die Gesamtfläche und desto besser der Korrosionsschutz. Die Vergabe der Bewertungszahlen erfolgte gemäß Tabelle 6. Es wurde ein Mittelwert aus 5 Blechen gebildet:

**Tabelle 6: Bewertungsschema Salzsprühtest**

| Korrodierte Fläche [%] | Bewertungszahl |
|---|---|
| Kein Fehler | 10 |
| 0<A<0,1 | 9 |
| 0,1<A<0,25 | 8 |
| 0,25<A<0_{;}5 | 7 |
| 0,5<A<1,0 | 6 |
| 1,0<A<2,5 | 5 |
| 2,5<A<5,0 | 4 |
| 5,0<A<10 | 3 |
| 10<A<25 | 2 |
| 25<A<50 | 1 |
| 50<A | 0 |

### b) Kondenswasser-Wechselklimatest KWT (DIN EN ISO 6270-2)

Des Weiteren wurden die Bleche im Kondenswasser-Wechselklimatest "KWT' gemäß der DIN EN ISO 6270-2 geprüft. Dieser besteht aus einem oder mehreren Klimazyklen mit jeweils zwei Prüfabschnitten.

Im ersten Abschnitt werden die Prüfkörper 8 Stunden mit einer Temperatur von 40°C und einer relativen Luftfeuchtigkeit von 100%, im zweiten Abschnitt bei einer Temperatur von 18-28°C bei einer Luftfeuchtigkeit von unter 100% (Umgebungsbedingungen), belastet. Die Dauer eines Zyklus beträgt 24 Stunden. Die optische Beurteilung der Proben erfolgte nach folgenden Kriterien als Mittelwert von 3 Blechen:

| | |
|---|---|
| 0 | kein Auskreiden |
| 1 | leichtes Auskreiden |
| 2 | mittelstarkes Auskreiden |
| 3 | starkes Auskreiden |
| 4 | sehr starkes Auskreiden |

### c) Stapeltest "Stack-Test"

Die Beständigkeit der wie oben beschrieben beschichteten Prüfbleche wurden in einem so genannten Stapeltest "Stack-Test" gegeneinander verglichen. Hierzu wurden drei beschichtete Bleche in der Mitte geteilt, mit je 5 ml destilliertem Wasser benetzt und mit den Prüfseiten aufeinander gelegt. Die Prüfung erfolgte in einer Klimawechselkammer, wo die Stapel ("Stacks") mit einem 5kg Gewicht beschwert und einer definierten Anzahl Zyklen ausgesetzt wurden (DIN EN ISO 6270-2, AHT). Die Bewertung der Korrosion erfolgte als Mittelwert von 3 Blechen nach folgendem Bewertungsschema:

| | |
|---|---|
| 0 = | keine Veränderung gegenüber frischem Blech optisch i. O. |
| 1 = | beginnende Weißung / Auskreidung (0- 20% der Fläche weiß) |
| 2 = | deutliche Weißung / Auskreidung und beginnender Weißrost (20-50% der Fläche weiß) |
| 3 = | starke Weißung / Auskreidung (50-80% der Fläche weiß) |
| 4 = | vollständig korrodiert (80-100% der Fläche weiß) |

### d) Bestimmung des Auflagegewicht

Die Bestimmung des Auflagegewichts Wurde gravimetrisch durch Differenzmessung der Tara vor und nach dem Beschichten jeweils im entmagnetisierten und trockenen Zustand der Prüfbleche bestimmt. Die Tara wird dann auf die Fläche der jeweiligen Bleche umgerechnet und in [g/m²] angegeben.

## Patentansprüche

1. Verfahren zum Passivieren einer metallischen Oberfläche, bei dem eine metallische Oberfläche mit einer wässrigen Zusammensetzung enthaltend die folgenden Komponenten in Kontakt gebracht wird:
a) mindestens ein wasserlösliches, saure Gruppen umfassendes Polymer (X), wobei das Polymer (X) mindestens 0,6 mol Säuregruppen/100 g Polymer aufweist; und wobei das Polymer (X) Carboxyl-Gruppen und Phosphonsäure-Gruppen umfasst;
b) 0,5 bis 5 Gew.-% mindestens eines Polyamins (P) umfassend mindestens zwei Ammonium-Gruppen;
c) mindestens ein Lösemittel (L), enthaltend mindestens 80 Gew.-% Wasser;
d) optional mindestens ein Tensid (T);
e) optional mindestens eine weitere Komponente (K);
wobei der pH-Wert der wässrigen Zusammensetzung im Bereich von 0,5 bis 2 liegt.

2. Verfahren gemäß Anspruch 1, **dadurch gekennzeichnet, dass** eine Zusammensetzung eingesetzt wird enthaltend
| | |
|---|---|
| a) 10 bis 40 Gew.-% | mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst; |
| b) 0,5 bis 5 Gew.-% | mindestens eines Polyamins (P) umfassend mindestens zwei Ammonium-Gruppen; ausgewählt aus Polyethyleniminen, alkoxylierten Polyethyleniminen, quaternisierten Polyethyleniminen, Polyvinylimidazolen, alkoxylierten Polyvinylimidazolen, quaternisierten Polyvinylimidazolen, Polyvinylaminen, alkoxylierten Polyvinylaminen und quaternisierten Polyvinylaminen; |
| c) 20 bis 89 Gew.-% | mindestens eines Lösemittels (L), enthaltend mindestens 80 Gew.-% Wasser; |
| d) optional 0,1 bis | 1 Gew.-% mindestens eines Tensids (T); |
| e) optional 0 bis 30 Gew.-% | mindestens einer weiteren Komponente (K). |

3. Verfahren gemäß einem der Ansprüche 1 oder 2, **dadurch gekennzeichnet, dass** es sich bei dem Polyamin (P) um mindestens ein Polyethylenimin mit einem Molekulargewicht im Bereich von 500 bis 250.000 g/mol handelt.

4. Verfahren gemäß einem der Ansprüche 1 bis 3, **dadurch gekennzeichnet, dass** es sich bei dem wasserlöslichen Polymeren (X) um ein Copolymer handelt, aufgebaut aus folgenden Monomeren:
| | |
|---|---|
| M1: 30 bis 90 Gew.-% | Methacrylsäure und/oder Acrylsäure; |
| M2: 10 bis 70 Gew.-% | mindestens eines weiteren von (M1) verschiedenen , monoethylenisch ungesättigten Monomers, welches eine oder mehrere saure Gruppen aufweist; |
| optional M3: 0 bis 40 Gew.-% | mindestens eines OH-Gruppen aufweisenden Methacrylsäureesters und/oder Acrylsäureesters; |
| optional M4: 0 bis 30 Gew.-% | mindestens eines weiteren, von (M1), (M2) oder (M3) verschiedenen ethylenisch ungesättigten Monomers. |

5. Verfahren gemäß einem der Ansprüche 1 bis 4, **dadurch gekennzeichnet, dass** es sich bei dem wasserlöslichen Polymeren (X) um ein Copolymer handelt, welches aus den folgenden Monomeren aufgebaut ist:
| | |
|---|---|
| M1: 20 bis 60 Gew.-% | Acrylsäure; |
| M2: 20 bis 60 Gew.-% | Vinylphosphonsäure; |
| M3: 1 bis 40 Gew.-% | Hydroxyethylacrylat. |

6. Verfahren gemäß einem der Ansprüche 1 bis 5, **dadurch gekennzeichnet, dass** die wässrige Zusammensetzung auf die metallische Oberfläche in Form eines Nassfilms aufgebracht wird, wobei die wässrige Zusammensetzung in einem Auftragsgewicht im Bereich von 0,3 bis 2 g/m² (bezogen auf die Summe aller Feststoffe der wässrigen Zusammensetzung) auf die metallische Oberfläche aufgebracht wird.

7. Verfahren gemäß einem der Ansprüche 1 bis 6, **dadurch gekennzeichnet, dass** es sich um ein kontinuierliches Verfahren zur Passivierung eines verzinkten Stahlbandes handelt.

8. Zusammensetzung zum Passivieren einer metallischen Oberfläche enthaltend
| | |
|---|---|
| a) 10 bis 40 Gew.-% | mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst; |
| b) 0,5 bis 5 Gew.-% | mindestens eines Polyamins (P) umfassend mindestens zwei Ammonium-Gruppen ausgewählt aus Polyethyleniminen, alkoxylierten Polyethyleniminen, quaternisierten Polyethyleniminen, Polyvinylimidazolen, alkoxylierten Polyvinylimidazol, quaternisierten Polyvinylimidazolen, Polyvinylamine, alkoxylierten Polyvinylaminen, und quaternisierten Polyvinylamine; |
| c) 20 bis 89 Gew.-% | mindestens eines Lösemittels (L), enthaltend mindestens 80 Gew.-% Wasser; |
| d) 0,1 bis 1 Gew.-% | mindestens eines Tensids (T); |
| e) 0 bis 30 Gew.-% | weitere Komponenten (K); |
wobei der pH-Wert der Zusammensetzung im Bereich von 0,5 bis 2 liegt.

9. Verfahren zur Herstellung einer Zusammensetzung gemäß Anspruch 8 umfassend die folgenden Schritte
a) Lösen des Polyamins (P) in einem Lösemittel (L) und Einstellen des pH-Wertes auf einen Wert von 0,5 bis 2 durch Zugabe von Säuren bis eine klare Lösung erhalten wird;
b) Lösen des Polymers (X) in einem Lösemittel (L);
c) Mischen der Polyamin-Lösung aus Schritt a) und der Polymer (X)-Lösung aus Schritt b);
d) optional Zugabe mindestens eines Tensids (T) und/oder mindestens einer weiteren Komponente (K).

10. Verwendung einer Zusammensetzung gemäß Anspruch 8 zur Passivierung einer metallischen Oberfläche bestehend im Wesentlichen aus einem oder mehreren Metallen ausgewählt aus der Gruppe bestehend aus Zink, Aluminium und Magnesium.

11. Beschichtung auf einer metallischen Oberfläche erhältlich durch das Inkontaktbringen einer metallischen Oberfläche mit einer wässrigen Zusammensetzung enthaltend die folgenden Komponenten:
a) mindestens eines wasserlöslichen, saure Gruppen umfassenden Polymers (X), wobei das Polymer (X) mindestens 0,6 mol Säuregruppen/100 g Polymer aufweist; und wobei das Polymer (X) Carboxyl-Gruppen und Phosphonsäure-Gruppen umfasst;
b) 0,5 bis 5 Gew.-% (bezogen auf die gesamte wässrige Zusammensetzung) mindestens eines Polyamins (P) umfassend mindestens zwei Ammonium-Gruppen;
c) mindestens ein Lösemittel (L), enthaltend mindestens 80 Gew.-% Wasser;
d) optional mindestens ein Tensid (T);
e) optional mindestens eine weitere Komponente (K);
wobei der pH-Wert der Zusammensetzung im Bereich von 0,5 bis 2 liegt.

## Claims

1. A method for passivating a metallic surface, wherein a metallic surface is contacted with an aqueous composition comprising the following components:
a) at least one water-soluble polymer (X) comprising acidic groups, the polymer (X) having at least 0.6 mol of acid groups/100 g of polymer; and the polymer (X) comprising carboxyl groups and phosphonic acid groups;
b) 0.5% to 5% by weight of at least one polyamine (P) comprising at least two ammonium groups;
c) at least one solvent (L), comprising at least 80% by weight of water;
d) optionally at least one surfactant (T);
e) optionally at least one further component (K);
the pH of the aqueous composition being in the range from 0.5 to 2.

2. The method according to claim 1, wherein a composition is used comprising
| | |
|---|---|
| a) 10% to 40% | by weight of at least one water-soluble polymer (X) comprising acidic groups, the polymer (X) having at least 0.6 mol of acid groups/100 g of polymer; and the polymer (X) comprising carboxyl groups and phosphonic acid groups; |
| b) 0.5% to 5% | by weight of at least one polyamine (P) comprising at least two ammonium groups; selected from polyethyleneimines, alkoxylated polyethyleneimines, quaternized polyethyleneimines, polyvinylimidazoles, alkoxylated polyvinylimidazoles, quaternized polyvinylimidazoles, polyvinylamines, alkoxylated polyvinylamines and quaternized polyvinylamines; |
| c) 20% to 89% | by weight of at least one solvent (L), comprising at least 80% by weight of water; |
| d) optionally 0.1% to 1% | by weight of at least one surfactant (T); |
| e) optionally 0% to 30% | by weight of at least one further component (K). |

3. The method according to either of claims 1 and 2, wherein the polyamine (P) is at least a polyethyleneimine having a molecular weight in the range from 500 to 250 000 g/mol.

4. The method according to any of claims 1 to 3, wherein the water-soluble polymer (X) is a copolymer synthesized from the following monomers:
M1: 30% to 90% by weight of methacrylic acid and/or acrylic acid;
| | |
|---|---|
| M2: 10% to 70% | by weightht of at least one further monoethylenically unsaturated monomer, different from (M1), which has one or more acidic groups; |
| optionally M3: 0% to 40% | by weight of at least one OH-containing methacrylic ester and/or acrylic ester; |
| optionally M4: 0% to 30% | by weight of at least one further ethylenically unsaturated monomer, different from (M1), (M2) or (M3). |

5. The method according to any of claims 1 to 4,
wherein the water-soluble polymer (X) is a copolymer which is synthesized from the following monomers:
M1: 20% to 60% by weight of acrylic acid;
M2: 20% to 60% by weight of vinylphosphonic acid;
M3: 1% to 40% by weight of hydroxyethyl acrylate.

6. The method according to any of claims 1 to 5, wherein the aqueous composition is applied to the metallic surface in the form of a wet film, the aqueous composition being applied at a coatweight in the range from 0.3 to 2 g/m² (based on the sum of all solids in the aqueous composition) to the metallic surface.

7. The method according to any of claims 1 to 6, which is a continuous method for passivating a galvanized steel coil.

8. A composition for passivating a metallic surface, comprising
| | |
|---|---|
| a) 10% to 40% | by weight of at least one water-soluble polymer (X) comprising acidic groups, the polymer (X) having at least 0.6 mol of acid groups/100 g of polymer; and the polymer (X) comprising carboxyl groups and phosphonic acid groups; |
| b) 0.5% to 5% | by weight of at least one polyamine (P) comprising at least two ammonium groups, selected from polyethyleneimines, alkoxylated polyethyleneimines, quaternized polyethyleneimines, polyvinylimidazoles, alkoxylated polyvinylimidazoles, quaternized polyvinylimidazoles, polyvinylamines, alkoxylated polyvinylamines and quaternized polyvinylamines; |
| c) 20% to 89% | by weight of at least one solvent (L), comprising at least 80% by weight of water; |
| d) 0.1% to 1% | by weight of at least one surfactant (T) ; |
| e) 0% to 30% | by weight of further components (K) ; |
the pH of the composition being in the range from 0.5 to 2.

9. A process for preparing a composition according to claim 8, comprising the following steps
a) dissolving the polyamine (P) in a solvent (L) and adjusting the pH to a value of 0.5 to 2 by adding acids until a clear solution is obtained;
b) dissolving the polymer (X) in a solvent (L);
c) mixing the polyamine solution from step a) and the polymer (X) solution from step b);
d) optionally adding at least one surfactant (T) and/or at least one further component (K).

10. The use of a composition according to claim 8 for passivating a metallic surface consisting substantially of one or more metals selected from the group consisting of zinc, aluminum and magnesium.

11. A coating on a metallic surface, obtainable by contacting a metallic surface with an aqueous composition comprising the following components:
a) at least one water-soluble polymer (X) comprising acidic groups, the polymer (X) having at least 0.6 mol of acid groups/100 g of polymer; and the polymer (X) comprising carboxyl groups and phosphonic acid groups;
b) 0.5% to 5% by weight (based on the total aqueous composition) of at least one polyamine (P) comprising at least two ammonium groups;
c) at least one solvent (L), comprising at least 80% by weight of water;
d) optionally at least one surfactant (T);
e) optionally at least one further component (K); the pH of the composition being in the range from 0.5 to 5.

## Revendications

1. Procédé pour la passivation d'une surface métallique, dans lequel on met une surface métallique en contact avec une composition aqueuse contenant les composants suivants :
a) au moins un polymère (X) hydrosoluble, comprenant des groupes acides, le polymère (X) comportant au moins 0,6 mole de groupes acides/100 g de polymère, et le polymère (X) comprenant des groupes carboxy et des groupes phosphono ;
b) 0,5 à 5 % en poids d'au moins une polyamine (P) comprenant au moins deux groupes ammonium ;
c) au moins un solvant (L), contenant au moins 80 % en poids d'eau ;
d) en option au moins un tensioactif (T) ;
e) en option au moins un autre composant (K) ;
le pH de la composition aqueuse se situant dans l'intervalle de 0,5 à 2.

2. Procédé selon la revendication 1, **caractérisé en ce qu'**on utilise une composition contenant
| | |
|---|---|
| a) 10 à 40 % en poids | d'au moins un polymère (X) hydrosoluble, comprenant des groupes acides, le polymère (X) comportant au moins 0,6 mole de groupes acides/100 g de polymère ; et le polymère (X) comprenant des groupes carboxy et des groupes phosphono ; |
| b) 0,5 à 5 % en poids | d'au moins une polyamine (P) comprenant au moins deux groupes ammonium ; choisie parmi des polyéthylène-imines, polyéthylène-imines alcoxylées, polyéthylène-imines quaternisées, polyvinylimidazoles, polyvinylimidazoles alcoxylés, polyvinylimidazoles quaternisés, polyvinylamines, polyvinylamines alcoxylées et polyvinylamines quaternisées ; |
| c) 20 à 89 % en poids | d'au moins un solvant (L), contenant au moins 80 % en poids d'eau ; |
| d) en option 0,1 à 1 % | en poids d'au moins un tensioactif (T) ; |
| e) en option 0 à 30 % | en poids d'au moins un autre composant (K). |

3. Procédé selon l'une quelconque des revendications 1 et 2, **caractérisé en ce que** pour ce qui est de la polyamine (P) il s'agit d'au moins une polyéthylène-imine ayant une masse moléculaire dans la plage de 500 à 250 000 g/mole.

4. Procédé selon l'une quelconque des revendications 1 à 3, **caractérisé en ce que** pour ce qui est du polymère (X) hydrosoluble il s'agit d'un copolymère formé à partir des monomères suivants :
| | |
|---|---|
| M1 : 30 à 90 % | en poidsd'acide méthacrylique et/ou d'acide acrylique ; |
| M2 : 10 à 70 % | en poidsd'au moins un autre monomère à insaturation monoéthylénique, différent de (M1), qui comporte un ou plusieurs groupes acides ; |
| en option M3 : 0 à 40 % | en poids d'au moins un ester d'acide acrylique et/ou ester d'acide méthacrylique comportant des groupes OH ; |
| en option M4 : 0 à 30 % | en poids d'au moins un autre monomère à insaturation éthylénique, différent de (M1), (M2) ou (M3). |

5. Procédé selon l'une quelconque des revendications 1 à 4, **caractérisé en ce que** pour ce qui est du polymère (X) hydrosoluble il s'agit d'un copolymère qui est formé à partir des monomères suivants :
M1 : 20 à 60 % en poids d'acide acrylique ;
M2 : 20 à 60 % en poids d'acide vinylphosphonique ;
M3 : 1 à 40 % en poids d'acrylate d'hydroxyéthyle.

6. Procédé selon l'une quelconque des revendications 1 à 5, **caractérisé en ce qu'**on applique sur la surface métallique la composition aqueuse sous forme d'un film humide, la solution aqueuse étant appliquée sur la surface métallique en un poids d'application dans la plage de 0,3 à 2 g/m² (par rapport à la somme de toutes les matières solides de la composition aqueuse).

7. Procédé selon l'une quelconque des revendications 1 à 6, **caractérisé en ce qu'**il s'agit d'un procédé continu pour la passivation d'un ruban d'acier galvanisé.

8. Composition destinée à la passivation d'une surface métallique, contenant
| | |
|---|---|
| a) 10 à 40 % en poids | d'au moins un polymère (X) hydrosoluble, comprenant des groupes acides, le polymère (X) comportant au moins 0,6 mole de groupes acides/100 g de polymère ; et le polymère (X) comprenant des groupes carboxy et des groupes phosphono ; |
| b) 0,5 à 5 % en poids | d'au moins une polyamine (P) comprenant au moins deux groupes ammonium ; choisie parmi des polyéthylène-imines, polyéthylène-imines alcoxylées, polyéthylène-imines quaternisées, polyvinylimidazoles, polyvinylimidazoles alcoxylés, polyvinylimidazoles quaternisés, polyvinylamines, polyvinylamines alcoxylées et polyvinylamines quaternisées ; |
| c) 20 à 89 % en poids | d'au moins un solvant (L), contenant au moins 80 % en poids d'eau ; |
| d) 0,1 à 1 % en poids | d'au moins un tensioactif (T) ; |
| e) 0 à 30 % en poids | d'autres composants (K) ; |
le pH de la composition se situant dans l'intervalle de 0,5 à 2.

9. Procédé pour la préparation d'une composition selon la revendication 8, comprenant les étapes suivantes
a) dissolution de la polyamine (P) dans un solvant (L) et ajustement du pH à une valeur de 0,5 à 2 par addition d'acides jusqu'à l'obtention d'une solution limpide ;
b) dissolution du polymère (X) dans un solvant (L) ;
c) mélange de la solution de polyamine provenant de l'étape a) et de la solution de polymère (X) provenant de l'étape b) ;
d) addition optionnelle d'au moins un tensioactif (T) et/ou d'au moins un autre composant (K).

10. Utilisation d'une composition selon la revendication 8 pour la passivation d'une surface métallique consistant essentiellement en un ou plusieurs métaux choisis dans le groupe constitué par le zinc, l'aluminium et le magnésium.

11. Revêtement sur une surface métallique, pouvant être obtenu par la mise en contact d'une surface métallique avec une composition aqueuse contenant les composants suivants :
a) au moins un polymère (X) hydrosoluble, comprenant des groupes acides, le polymère (X) comportant au moins 0,6 mole de groupes acides/100 g de polymère, et le polymère (X) comprenant des groupes carboxy et des groupes phosphono ;
b) 0,5 à 5 % en poids (par rapport à la composition aqueuse totale) d'au moins une polyamine (P) comprenant au moins deux groupes ammonium ;
c) au moins un solvant (L), contenant au moins 80 % en poids d'eau ;
d) en option au moins un tensioactif (T) ;
e) en option au moins un autre composant (K) ;
le pH de la composition se situant dans l'intervalle de 0,5 à 2.
